# EUROPEAN PATENT APPLICATION

(11) **EP 1 631 058 A1**
(43) Date of publication of application: **01.03.2006**
(21) Application number: 05018319.3
(22) Date of filing: 23.08.2005
(51) Int. Cl.: H04N 1/62

(54) **System, method and computer program for proof correction and inspection**

(30) Priority: 25.08.2004 JP 2004245403; 10.09.2004 JP 2004263959
(71) Applicant: Dainippon Screen Mfg. Co., Ltd., Kyoto 602-8585 (JP)
(72) Inventor: Ishijima, Takashi, Dainippon Screen Mfg.Co.,Ltd, Horikawa-dori Kamikyo-ku Kyoto 602-8585 (JP); Oku, Katsuji, Dainippon Screen Mfg.Co.,Ltd, Horikawa-dori Kamikyo-ku Kyoto 602-8585 (JP)
(74) Representative: Kilian, Helmut

(57) **Abstract**

Correction instruction data is acquired by scanning a proof with an image scanner. Differential processing is performed between the correction instruction data and rasterized data for extracting differential data. The differential data is layered with unproofread printing data. A plurality of blocks are generated by virtually dividing a correction object layer in a latticelike manner. Upon acquisition of layered data and area division data, printing data is corrected according to a correction instruction described in a differential layer. At this time, correction history data is recorded in association with a block related to correction. Thus, correction history can be confirmed and re-corrected in units of blocks while employment/nonemployment of correction in each correction processing unit can be selected.

First differential data is obtained as a differential between data prepared by rasterizing uncorrected and corrected printing data respectively. Correction instruction data is obtained by reading a proof with an image scanner. Second differential data is obtained by extracting a correction instruction from the correction instruction data. Area regulation data is obtained by regulating an arrangement position of the extracted correction instruction. Inspection data is obtained by layering the first differential data and the area regulation data. Inspection processing is performed on an image expressed by the inspection data. It is possible to determine whether or not correction processing has been performed according to the correction instruction through presence/absence of superposition of a differential area and a correction instruction area.

## Description

### BACKGROUND OF THE INVENTION

### Field of the Invention

The present invention relates to a printing data processor preferable for executing correction based on a correction instruction described in a proof and determining whether or not the correction has been properly executed.

### Description of the Background Art

In order to create printed matter in response to an order received from a client, a printer generally prepares a trial impression, i.e. the so-called proof, in advance of a regular press, so that the client proofreads this proof. The client, OK'ing the regular press when determining that the proof requires no correction, generally gives an "OK with change" instead of such an immediate OK. The term "OK with change" denotes the client's OK on the premise that the printer corrects minor errors or the like and OK's the proof on his responsibility. In this case, it follows that the printer corrects printing data while confirming the contents of an OK'd proof in which correction instructions are described by the client and proofreads the results of the correction.

A technique directed to proofreading in the aforementioned case or support of proofreading in formation of a proof is already known through Japanese Patent Laying-Open Gazette No. 9-6975 (1997) or 9-231390 (1997).

A digital inspection apparatus comparing uncorrected and corrected printing data with each other and displaying the differential therebetween is also already known through Japanese Patent No. 2816091 or Japanese Patent Laying-Open Gazette No. 8-202014 (1996).

In proofreading of printed matter for an OK with change, it must be reliably confirmable that all correction instructions issued by the client have been executed and portions requiring no correction have not been erroneously corrected. Further, it can be said preferable that re-correction can be easily made when the correction instructions have not been entirely satisfactory.

While an apparatus related to Japanese Patent Laying-Open Gazette No. 9-6975 can generate differential data between layout data in the first revise and corrected (revised) layout data, it is not possible with this apparatus to compare the differential data with the contents of an OK'd proof or make correction on the basis of the OK'd proof.

While an apparatus disclosed in Japanese Patent Laying-Open Gazette No. 9-231390 can display a layout image in the first revise and portions to be corrected superpositively on a display for making correction on the basis of the displayed contents, it is not possible with this apparatus to directly confirm whether or not the correction has been correctly made.

While the apparatus related to Japanese Patent No. 2816091 can display a differential image between a layout image in the first revise and a corrected (revised) layout image and correction instructions based thereon on a display, it is not possible with this apparatus to make correction itself.

While the apparatus related to Japanese Patent Laying-Open No. 8-202014 can singly or superpositively display a layout image in the first revise, a corrected (revised) layout image and/or a differential image therebetween on a display, it is not possible with this apparatus to make correction based on the displayed contents.

### SUMMARY OF THE INVENTION

The present invention relates to a printing data processor preferable for executing correction based on a correction instruction described in a proof sheet and determining whether or not the correction has been properly executed.

According to the present invention, the printing data processor comprises a differential element generating differential data between first image data and proof data, wherein the proof data is generated by reading a proof sheet related to the first image data with a prescribed reader, a layering element generating layered data having a first and a second layer, wherein the first layer is formed on the basis of the differential data and the second layer is formed on the basis of second image data respectively, and a display element displaying information related to correction with respect to the first image data on the basis of the layered data.

Thus, it is possible to execute correction based on a correction instruction and determine whether or not the correction has been properly executed while simultaneously displaying information related to the correction instruction described in a proof sheet and information related to image data to be corrected.

Preferably, the printing data processor further comprises an area division element virtually dividing printed matter expressed by the second image data to obtain a plurality of divided areas, an edit element implementing correction processing with respect to the second image data on the second layer while making the display element display a superposed image of the first and second layers, and a history reference element making the display element display the history of the correction processing according to a prescribed history reference instruction, the second image data is generator data of the first image data, the edit element associating processing contents in the correction processing with a relevant divided area relevant to the processing contents among the plurality of divided areas per unit correction processing to record them as history data, and the history reference element responses to arbitrary specification of an objected history reference position to make the display element display only such at least one processing content among the processing contents as the history that a divided area including the objected history reference position forms the relevant divided area.

Thus, when an arbitrary portion is specified as an objected history reference position while superpositively displaying the first and second layers, the history of only edit processing having been performed on (a divided area including) this portion is displayed. Description contents of the first layer as to this portion and the history can be directly contrasted with each other so that necessary edit processing can be further added to printing data constituting the second layer in response to the result.

According to another aspect, the printing data processor further comprises a first differential element generating first differential data between the first image data and corrected image data obtained by correcting the first image data, while the differential element is a second differential element, and the differential data is second differential data.

More preferably in this aspect, the layering element is an inspection data creation element, and the layered data is inspection data for forming a differential area in the first layer on the basis of the first differential data while forming a correction instruction area in the second layer on the basis of the second differential data, for displaying a superposed state of the differential area and the correction instruction area on the display element on the basis of the inspection data.

Thus, it is possible to determine whether or not the first image data has been corrected while reflecting a correction instruction described in a proof sheet by confirming whether or not the differential area and the correction instruction area are superpositively present on the same position in an image based on the inspection data displayed on the display element. It is possible to easily determine whether re-correction is necessary or the process can shift to output processing for implementing efficient processing in a printing work flow.

Accordingly, an object of the present invention is to provide a printing data processor capable of reliably correcting image data on the basis of a correction instruction through a sheet of an OK with change or the like.

Another object of the present invention is to provide a printing data processor capable of easily and properly determining whether or not correction based on a correction instruction has been executed.

The foregoing and other objects, aspects and advantages of the present invention will become more apparent from the following detailed description of the present invention when taken in conjunction with the accompanying drawings.

### BRIEF DESCRIPTION OF THE DRAWINGS

Fig. 1 is a model diagram illustratively showing the structure of a printing system including a printing data processor according to a first embodiment of the present invention;
Fig. 2 is a diagram for illustrating functions implemented in a control part of the printing data processor according to the first embodiment;
Fig. 3 illustrates a flow of data employed in the process of outputting a proof and transfer thereof;
Fig. 4 illustrates a flow of correction processing;
Fig. 5 illustrates a flow of data employed in the process of correction processing and transfer thereof;
Figs. 6A to 6E illustrate partial data employed in the process of correction processing;
Fig. 7 illustrates exemplary area division processing on a correction object layer;
Fig. 8 illustrates a layout image expressed by temporary data obtained by correcting layered data on the basis of correction instructions;
Figs. 9A and 9B are diagrams for illustrating unit correction data forming data units of correction history data;
Fig. 10 illustrates a layout image of layered data after the correction processing shown in Fig. 8;
Fig. 11 illustrates points for referring to a correction history;
Figs. 12A and 12B illustrate correction history display windows displayed on a display part as exemplary correction history display;
Fig. 13 illustrates a layout image based on layered data to which an erroneous filling object has been added as correction processing based on a correction instruction;
Fig. 14 illustrates correction history data to which the erroneous filling object has been added;
Fig. 15 illustrates a correction history display window as to the same points as those in Fig. 11 in the case where the erroneous filling object has been added;
Fig. 16 illustrates correction history data in a case of re-correction;
Fig. 17 illustrates a layout image according to layered data when "0" is described in a result flag region of unit correction data;
Fig. 18 illustrates a layout image based on layered data in a case where correction processing based on history items has been canceled;
Fig. 19 is a model diagram illustratively showing the structure of a printing system including a printing data processor according to a second embodiment of the present invention;
Fig. 20 is a diagram for illustrating functions implemented in a control part of the printing data processor according to the second embodiment;
Fig. 21 illustrates a flow of data related to output of a proof;
Fig. 22 illustrates a flow of data after correction based on the proof;
Fig. 23 illustrates a flow of processing related to inspection;
Fig. 24 illustrates a flow of data related to inspection processing;
Fig. 25 illustrates an image expressed by first printing data;
Fig. 26 illustrates a proof output on the basis of first rasterized data;
Fig. 27 illustrates an image expressed by second printing data;
Fig. 28 illustrates an image expressed by first differential data;
Fig. 29 illustrates an image expressed by second differential data;
Fig. 30 shows a case of displaying correction instructions with rectangular frames as correction instruction areas respectively;
Fig. 31 is a diagram for illustrating the contents of area regulation processing;
Fig. 32 illustrates an image expressed by area regulation data;
Fig. 33 illustrates an image expressed by inspection data; and
Fig. 34 illustrates an image expressed by inspection data not subjected to area regulation processing.

### DESCRIPTION OF THE PREFERRED EMBODIMENTS

### <First Embodiment>

### <System Structure>

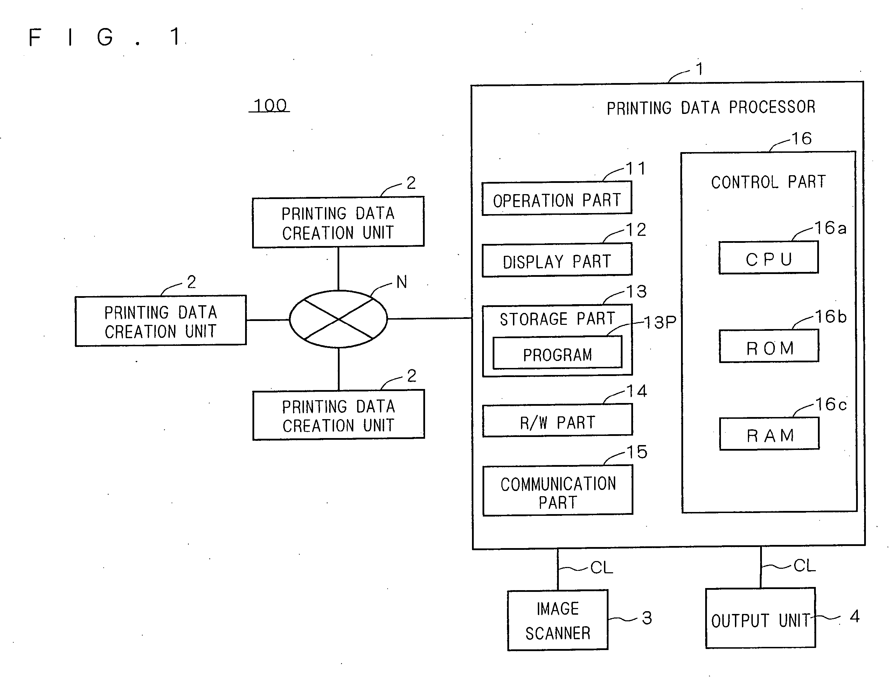

Fig. 1 is a model diagram illustratively showing the structure of a printing system 100 including a printing data processor 1 according to a first embodiment of the present invention. The printing system 100 is a system bearing a series of workflows from creation of printing data to proofreading and output. This printing system 100 mainly comprises the printing data processor 1, printing data creation units 2, an image scanner 3 and an output unit 4. While Fig. 1 shows such a mode that the printing data processor 1 and the printing data creation units 2 are electrically connected with each other through a network N such as a LAN (local area network), for example, and the image scanner 3 and the output unit 4 are electrically connected to the printing data processor 1 through communication lines CL, this is not an essential mode. Alternatively, the image scanner 3 and the output unit 4 may also be connected to the network N. Further alternatively, the respective units may be individually present for transferring data therebetween through a prescribed recording medium.

The printing data processor 1 is an apparatus to make the output unit 4 output a proof (proof sheet) employed for proofreading printed matter to be obtained on the basis of printing data which have been created in each printing data creation unit 2 while allowing an operator correct the printing data on the basis of the result of this proofreading. The details of the printing data processor 1 are described later.

Each printing data creation unit 2 is an apparatus bearing creation of the printing data by performing layout processing such as text composing or image arrangement in the printed matter. This printing data creation unit 2 is implemented by a computer enabled to execute the layout processing through prescribed layout software loaded therein, for example.

The printing data created by the printing data creation unit 2 is transferred to the printing data processor 1, subjected to RIP (raster image processing, or rasterization) described later if necessary, and subjected to a rear-stage workflow such as output of a proof. While Fig. 1 shows such a mode that three printing data creation units 2 are connected to the printing data processor 1 through the network N, this is merely an illustration, and the printing data processor 1 may alternatively be connected with one, two or at least four printing data creation units 2. Further alternatively, each printing data creation unit 2 may comprise an RIP function and be enabled to transfer rasterized data to the printing data processor 1.

The image scanner 3 is an image reading apparatus photoelectrically reading an image provided on a paper medium to convert the same to electronic data (image data). According to this embodiment, the image scanner 3 is mainly employed for reading an image of a proof (or a sheet of an OK with change) to generate correction instruction data, in which correction instructions such as proof marks have been described by a proofreader (a client, for instance) after temporary output. A well-known scanner can be employed as the image scanner 3, on condition that the same satisfies necessary resolution conditions.

The output unit 4 is a unit outputting printed matter on the basis of printing data of a prescribed data format. The type of the output unit 4 according to this embodiment is not restricted so far as the same can output printed matter at least suitably usable as a proof but may be properly selected and employed in response to the contents of the printed matter and the object of proofreading. For example, an ink jet printer, a thermal transfer printer or a laser printer can be employed as the output unit 4, and a high-end DDCP (direct digital color proofer) capable of outputting halftone-dot images actually close to printed matter is also employable. It follows that the printing data processor 1 supplies the output unit 4 with data of a data format output-processible in the output unit 4. While the output unit 4 is generally supplied with rasterized data obtained by RIP, printing data not yet subjected to rasterization can be subjected to output processing as such if the output unit 4 has an RIP function. The output unit 4, preferably capable of directly outputting the proof with digital data, may temporarily create a film with an image setter for performing a chemical proof or outputting the proof with the same. In this case, the output unit 4 is referred to inclusively of the image setter. Another output unit outputting a high-resolution halftone dot image for a regular press may alternatively be employed.

### <Structure of Printing Data Processor>

The printing data processor 1 is implemented by a computer. In other words, the printing data processor 1 mainly comprises an operation part 11 formed by a mouse and a keyboard employed by the operator for inputting various types of instructions, a display part 12 such as a display, a storage part 13 constituted of a hard disk or the like for preserving a program 13p for making the computer function as the printing data processor 1 etc., an R/W part 14 formed by a media reader/writer reading/writing data from/in various portable recording media such as a DVD-RAM/RW, a CD-RW and the like, a communication part 15 serving as an interface for transferring data between the same and other apparatuses on the network N or the image scanner 3 and the output unit 4 through the communication lines CL, and a control part 16 constituted of a CPU 16a, a ROM 16b and a RAM 16c for implementing functions described later.

The printing data processor 1 implements the so-called GUI (graphical user interface) capable of performing processing while making the display part 12 display the details of the operation through the operation part 11, various procedures etc. with the functions of the control part 16, the operation part 11 and the display part 12. The printing data processor 1 also performs processing in the respective parts implemented by the control part 16 with this GUI as described later.

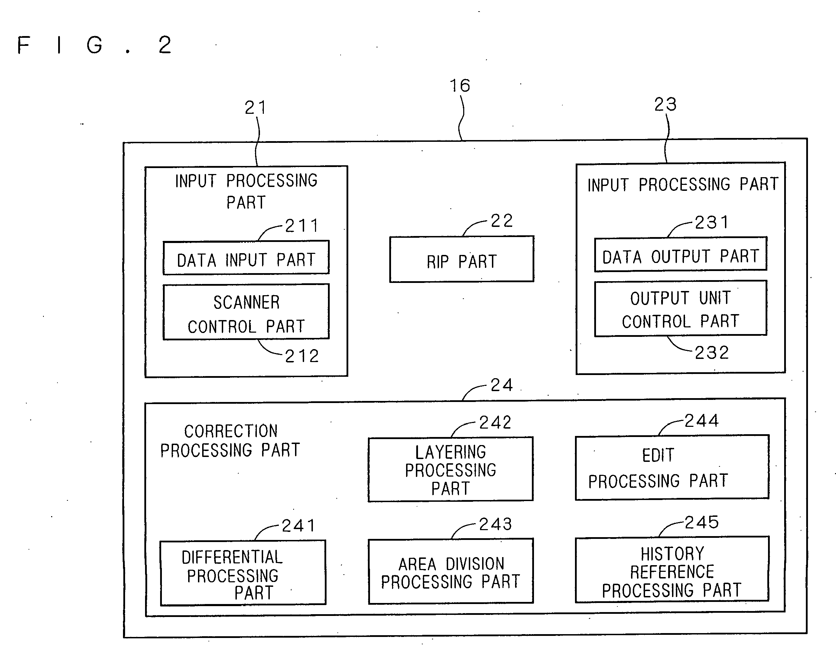

Fig. 2 is a diagram for illustrating the functions implemented in the control part 16 of the printing data processor 1. The control part 16 executes the prescribed program 13p stored in the storage part 13 with the CPU 16a, the ROM 16b and the RAM 16c, thereby mainly implementing an input processing part 21, an RIP part 22, an output processing part 23 and a correction processing part 24.

The input processing part 21 implements processing related to data input into the printing data processor 1 from an external unit and acquisition of image data from the image scanner 3. The input processing part 21 mainly comprises a data input part 211 and a scanner control part 212.

The data input part 211 implements formation of a processing dialog or a processing menu at the time of receiving data from outside the printing data processor 1 through the network N, reading data recorded in a prescribed recording medium in the R/W part 14 or acquiring image data from the image scanner 3 and prescribed processing according to operation instructions by the operator through the operation part 11.

The scanner control part 212 controls operations of the image scanner 3 to perform scanning, when the operator issues an executive instruction for acquiring image data (correction instruction data) in the image scanner 3 with the data input part 211 through the operation part 11, according to prescribed resolution, a prescribed scanning range, a prescribed scanning rate etc. in response to the executive instruction.

As hereinabove described, the RIP part 22 implements rasterization of converting printing data transferred from each printing data creation unit 2 to bit-mapped data output-processible from the output unit 4. The RIP part 22 generates rasterized data responsive to the output resolution of the output unit 4. The RIP part 22, generating rasterized data having output resolution of about 300 to 400 dpi in general, outputs halftone dot image data having high resolution of about 2400 dpi as rasterized data when the output unit 4 is a unit such as a high-end DDCP capable of forming halftone dots equivalent to actual printed matter, for example. A well-known technique is applicable to rasterization.

While the printing data creation unit 2 or the output unit 4 may perform RIP as described above, the following description is made mainly with reference to a case where the printing data processor 1 performs rasterization of printing data to obtain rasterized data and supplies the rasterized data to the output unit 4 for outputting the same.

The output processing part 23 implements processing necessary for outputting a proof from the output unit 4 or processing of transferring printed matter data for a regular press obtained after completing proofreading to the external unit. The output processing part 23 mainly comprises a data output part 231 and an output unit control part 232.

The data output part 231 implements formation of a processing dialog or a processing menu at the time of outputting data to the outside of the printing data processor 1 through the network N, writing data in a prescribed recording medium in the R/W part 14 or transmitting data for output to the output unit 4 and prescribed processing according to operation instructions by the operator through the operation part 11.

The output unit control part 232 controls operations of the output unit 4 to output a proof, when the operator issues an executive instruction for outputting the proof from the output unit 4 with the data output part 231 through the operation part 11, on the basis of data (rasterized data, for example) for output created according to the type of the output unit 4 in response to the executive instruction.

The correction processing part 24 implements processing for enabling correction of the printing data according to correction instructions described in the proof. This embodiment is characteristic in a point that the correction processing part 24 can perform correction processing according to correction instructions converted to image data after the image scanner 3 reads the correction instructions described in the proof and converts the same to the image data. The correction processing part 24 mainly comprises a differential processing part 241, a layering processing part 242, an area division processing part 243, an edit processing part 244 and a history reference processing part 245.

The differential processing part 241 implements differential processing of subtracting the contents of printed matter originally expressed in the proof (that is, printing image expressed by data for proof output) from correction instruction data which is image data obtained by scanning the proofread proof having the correction instructions described therein with the image scanner 3 thereafter to extract only the described correction instructions as image data (referred to as differential data). In the differential processing, the differential processing part 241 operates a differential of a color density value every pixel between the correction instruction data and the data (herein, rasterized data) for proof output, for generating the differential data.

The layering processing part 242 implements layering processing of generating layered data consisting of layers formed by the differential data obtained by the differential processing part 241 and the data subjected to the proof output, i.e., the printing data to be subjected to correction processing, respectively. The layers of the layered data formed by the differential data and the printing data are referred to as a differential layer and a correction object layer respectively.

The area division processing part 243 implements area division processing of virtually bringing a state of dividing printed matter in a latticelike manner as to the correction object layer (entity: printing data) expressing the printed matter. Each divided area obtained by division is referred to as a block.

The edit processing part 244 implements edit processing of the operator changing the contents of the printing data. This edit processing defines substantial contents of the correction processing performed on the printing data in this embodiment. In particular, this embodiment is characteristic in a point of performing correction processing on the correction object layer of the layered data according to correction instructions described in the differential layer superposed therewith in the layered data. It may be possible to newly create printing data, and it follows that the edit processing part 244 implements functions similar to those of the printing data creation unit 2 in this case.

When the operator performs some correction processing on the correction object layer, temporary data reflecting the contents of the correction processing is generated. The temporary data is updated every time the operator performs new correction processing. When the operator inputs an instruction for defining the contents of edit processing through the operation part 11, corrected printing data reflecting the latest temporary data at this point of time is generated.

When the operator performs correction processing, correction history data is also generated through the function of edit processing part 244. Every time some correction processing is performed, the edit processing part 244 adds the contents of this processing to the correction history data. At this time, the edit processing part 244 describes relevant block information indicating to which block the correction processing has been relevant along with the contents of the correction processing.

The history reference processing part 245 implements history reference processing for making it possible to refer to what kind of correction has been made on which portion of the printed matter in units of the blocks when the operator has performed correction processing.

### <Proof Output>

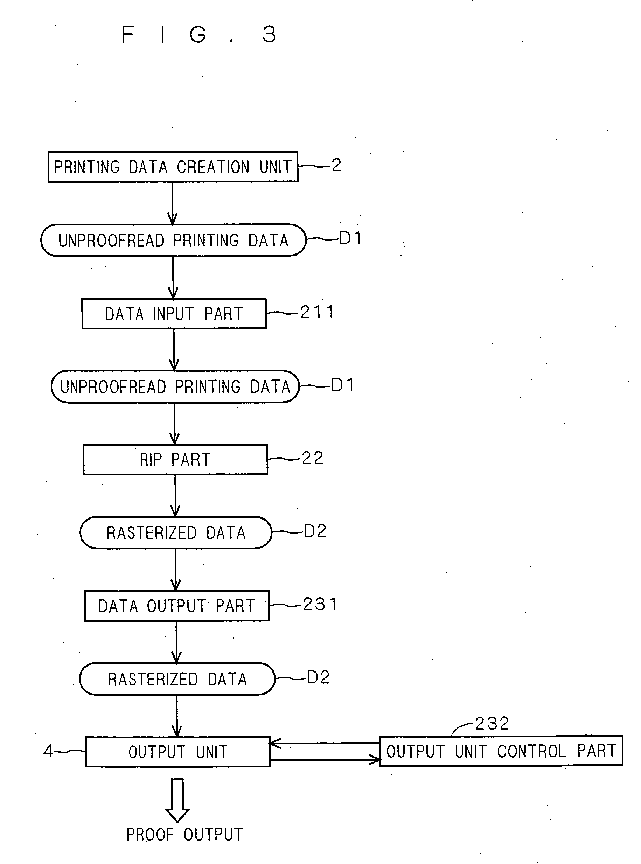

The proof output made in the printing system 100 according to this embodiment is now described. Fig. 3 illustrates a flow of data employed in the process of outputting the proof and transfer thereof.

As hereinabove described, the printing data creation unit 2 transfers the printing data created therein to the printing data processor 1 as unproofread printing data D1 through the network N, for example. As shown in Fig. 3, the unproofread printing data D1 is acquired by the printing data processor 1 through the function of the data input part 211, so that it is stored in the storage part 13, the RAM 16c, or the like.

When the operator issues an executive instruction for RIP through the operation part 11, the RIP part 22 rasterizes the unproofread printing data D1 to generate rasterized data D2, which is raster data having resolution suitable for output from the output unit 4. This rasterized data D2 is stored in the storage part 13, the RAM 16c, or the like. When the operator issues an executive instruction for proof output through the operation part 11, the data output part 231 transmits the rasterized data D2 to the output unit 4 through the communication line CL.

The output unit 4 outputs the proof on the basis of the received rasterized data D2. Operations of the output unit 4 are controlled by the output unit control part 232. It follows that the output proof is subjected to proofreading by the proofreader.

When the output unit 4 comprises an RIP function, the unproofread printing data D1 is directly transmitted thereto without rasterization in the RIP part 22. In this case, the printing data creation unit 2 may directly transfer the unproofread printing data D1 to the output unit 4 for outputting the proof without through the printing data processor 1. In order to perform correction processing described later, however, the printing data processor 1 must be supplied with the unproofread printing data D1.

In the proofreading of the proof, the proofreader confirms whether or not arrangement, appearance, color reproducibility etc. of laid-out characters, images etc. are erroneous or consistency with those intended in creation of the printing data. If necessary, the proofreader directly describes correction instructions in the proof. The correction instructions are described with prescribed proofreader's marks or the like, generally in red.

### <Correction Processing>

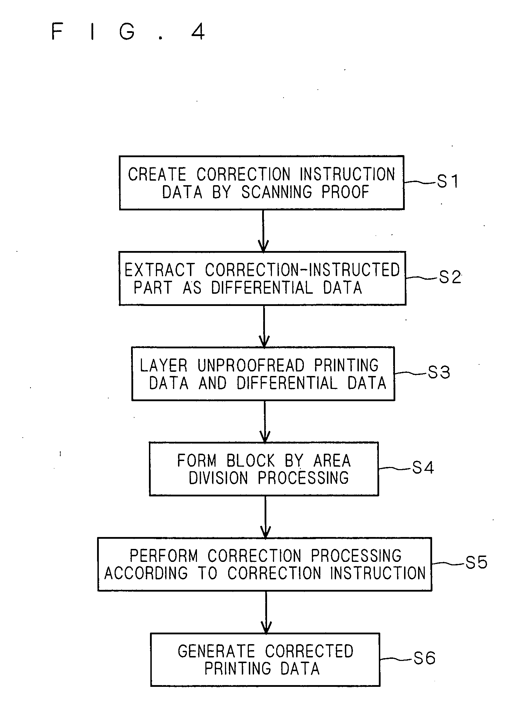

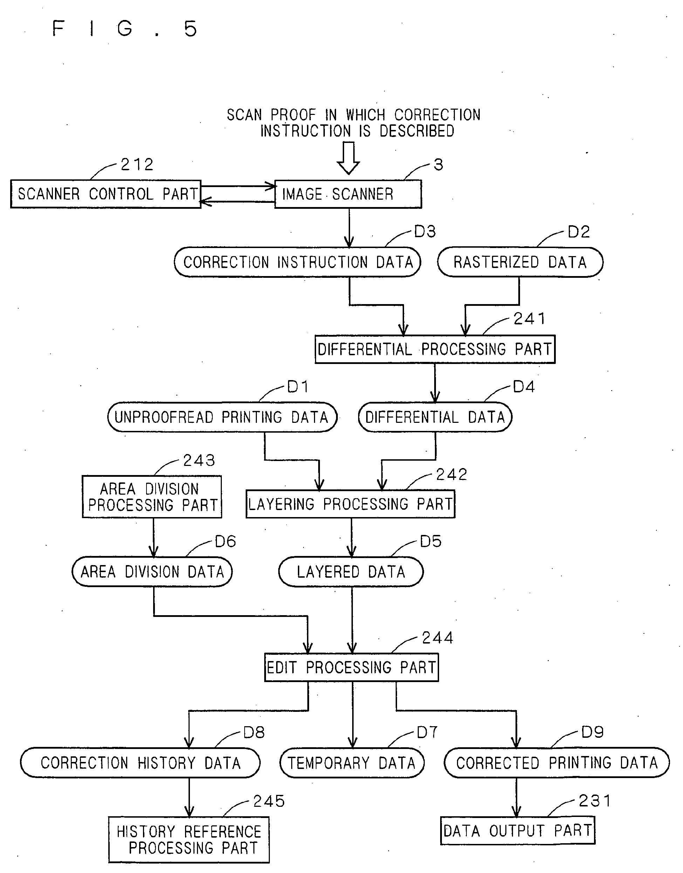

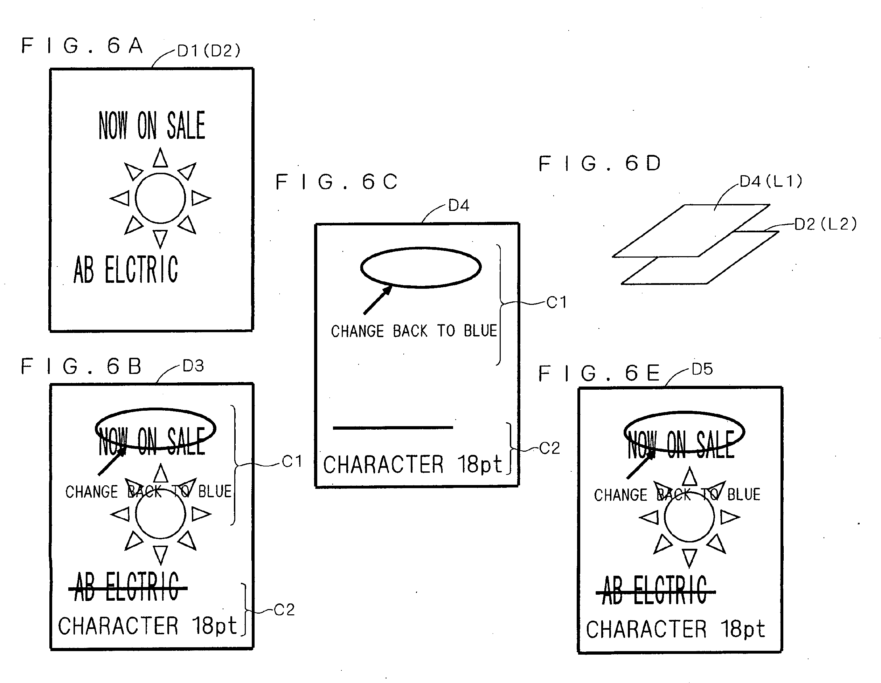

Correction processing performed on the printing data in the printing data processor 1 according to this embodiment is now described. It is performed on the basis of the correction instructions described in the proof. Fig. 4 illustrates a flow of the correction processing. Fig. 5 illustrates data employed in the process of the correction processing and a flow of transferring thereof. Figs. 6A to 6E illustrate partial data thereamong.

First, the operator acquires proof image data as correction instruction data D3 by scanning the proof having the correction instructions described therein with the image scanner 3 (step S1). The correction instruction data D3 is stored in the storage part 13, the RAM 16c, or the like. Operations of the image scanner 3 are controlled by the scanner controller part 212. Assuming that Fig. 6A shows an exemplary layout image expressed by the unproofread printing data D1, the correction instruction data D3 is obtained as image data including correction instructions, as shown in Fig. 6B. The image data shown in Fig. 6B is supplied with two correction instructions C1 and C2. The correction instruction C1 is directed to change the color of the background (back) to "blue". While the correction instruction C1 is assumed to be a simple instruction for "blue" for the purpose of simplification, it is preferable to more strictly specify the color on the basis of the CMYK colorimetric system, for example. It is assumed that color specifications in the correction instruction C1 are C: 100 %, M: 50 %, Y: 0 % and K: 30 %. The correction instruction C2 is directed to change the character size to "18 pt (points)". As the correction instruction data D3 is acquired as bit-mapped data, it is preferable that the correction instruction data D3 is acquired at resolution substantially identical to or higher than that of the rasterized data D2 employed for outputting the proof.

Upon acquisition of the correction instruction data D3, the differential processing part 241 extracts differential data D4 by executing differential processing between the correction instruction data D3 and the rasterized data D2 (step S2). Fig. 6C illustrates the differential data D4. The differential data D4 is stored in the storage part 13, the RAM 16c, or the like. The differential processing part 241 executes a differential operation pixel-by-pixel in the differential processing, and hence the correction instruction data D3 and the rasterized data D2 are preferably substantially identical in resolution to each other. Granted that these data D3 and D2 are different in resolution from each other, no problem may arise when differential processing is performed after converting the resolution of either the correction instruction data D3 or the rasterized data D2.

Upon acquisition of the differential data D4, the layering processing part 242 executes layering processing of layering the unproofread printing data D1 and the differential data D4 in certain data (step S3). According to this layering processing, the layering processing part 242 generates layered data D5 consisting of a differential layer L1 derived from the differential data D4 and a correction object layer L2 derived from the unproofread printing data D1, as shown in Fig. 6D. The layered data D5 is stored in the storage part 13, the RAM 16c, or the like. In this layering processing, the layering processing part 242 describes arrangement positions of respective objects in the unproofread printing data D1 in association with a coordinate system for describing the differential data D4 of bit-mapped form. The layering processing renders an image superposing the layers L1 and L2 with each other visually recognizable, as shown in Fig. 6E. In other words, a state identical to that where the correction instructions toward portions to be corrected are described in the proof is displayed in the display part 22 through the layering processing. While the correction object layer L2 may alternatively be constituted of the rasterized data D2, the arrangement positions of the respective objects in the unproofread printing data D1 must have been previously associated with the coordinate system for describing the rasterized data D2 of bit-mapped form in this case.

The layered data D5 and the correction instruction data D3, appearing to express substantially identical images (see Figs. 6B and 6E) as far as visually recognized on the display part 12, are different in presence or absence of layered structure. Preferably, it is enabled to easily switch the state superposing the layers L1 and L2 with each other as shown in Fig. 6E, a state displaying only the differential layer L1 and a state displaying only the correction object layer L2 for displaying the layered data D5 on the display part 12.

Upon completion of layering processing, the area division processing part 243 performs area division processing on the correction object layer L2 (unproofread printing data D1). Thus, the correction object layer L2 is virtually divided in a latticelike manner, and it causes to form a plurality of blocks (step S4). In this area division, the area division processing part 243 requires the operator to input vertical and transverse numbers M and N of the blocks by making the display part 12 display a prescribed dialog (M and N: natural numbers).

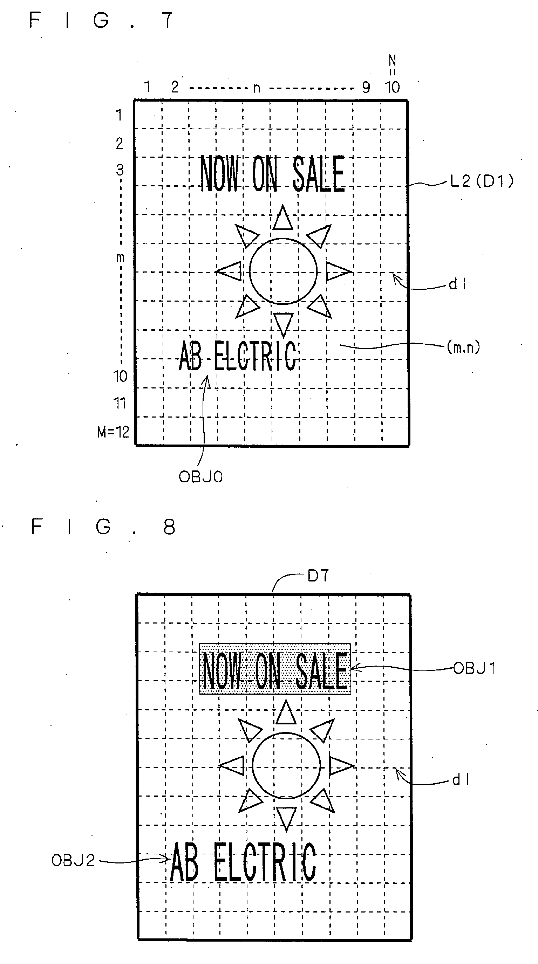

When the operator inputs arbitrary natural numerical values as the numbers M and N through the operation part 11, the area division processing part 243 responsively generates area division data D6 according to the input values. The area division data D6 is data defining the blocks in the correction object layer L2. This area division data D6 is stored in the storage part 13, the RAM 16c, or the like. Fig. 7 shows exemplary area division processing on the correction object layer L2. Fig. 7 illustrates a case of describing the number of a vertically m-th and transversely n-th block from the upper left end as (m, n) assuming that the values M and N are equal to 12 and 10 respectively. It can be said that area division processing is that of virtually setting a plurality of divisional lines d1 shown in Fig. 7.

While the numerical values M and N define the sizes of the blocks, the blocks form reference units for referring to the history of correction in this embodiment and hence it is preferable to set the values of the numbers M and N in response to the contents of printed matter for forming blocks practical for such reference to the history. For example, it is preferable to reduce the sizes of the blocks by setting the numerals M and N to relatively large values if the printed matter includes a large number of fine characters and graphics and correction instructions are generally issued in units of fine areas, while the numbers M and N may be set to relatively small values for obtaining large-sized blocks if the printed matter contrarily includes a large number of large characters and graphics.

While Fig. 7 illustrates the vertical and transverse divisional lines d1 for convenience of illustration, such divisional lines d1 are not actually written to the correction object layer L2 but positions passed by these divisional lines d1 on the coordinate plane defining the correction object layer L2 are substitutionally described in the area division data D6 in relation to the values of the block numbers (m, n). In other words, it is determined that which positions the blocks of the block numbers (m, n) correspond to on the correction object layer L2 by referring to the correction object layer L2 and the area division data D6.

The area division processing part 243 may alternatively perform area division processing on the unproofread printing data D1 in advance of generation of difference data, to similarly obtain the area division data D6.

Upon acquisition of the layered data D5 and the area division data D6, it is enabled that the operator performs correction processing of correcting the contents of the correction object layer L2 according to the correction instructions described in the proof (step S5). This correction processing is brought by correction operation (edit operation) by the operator on the correction object layer L2 rendered editable by the edit processing part 244, based on the correction instructions. This operation, which is basically similar to an operation in the layout by the printing data creation unit 2, is implemented by arranging, deleting and changing objects in a layout image expressed by the layered data D5 and displayed on the display part 12 through the GUI, and properly editing the contents of description related to the correction object layer L2. Upon some correction processing performed, temporary data D7 which expresses the state of the correction object layer L2 having been corrected is generated. The temporary data D7 is stored in the RAM 16c, and updated every time the operator performs correction. In other words, it follows that the temporary data D7 expresses the correction object layer L2 during correction processing.

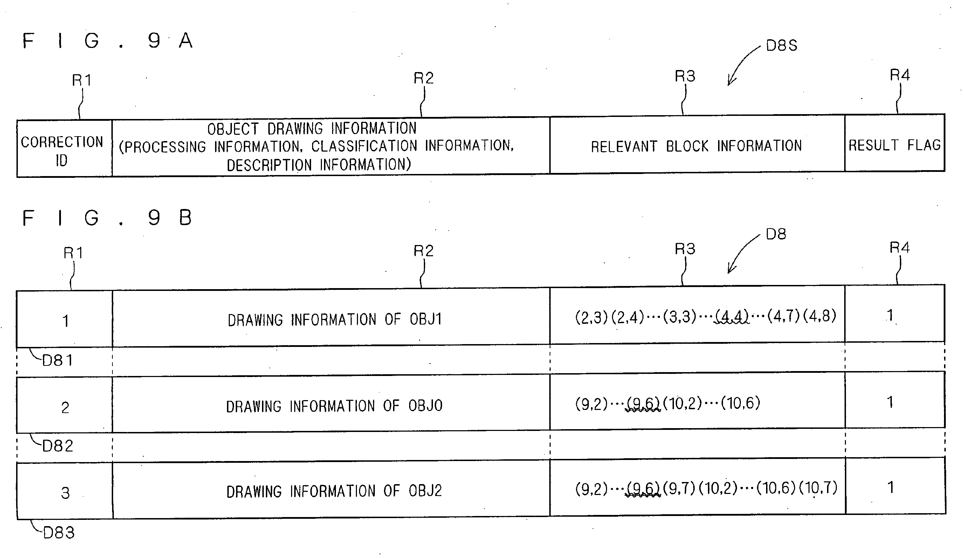

According to this embodiment, however, the differential layer L1 obtained by converting the correction instructions to image data is superposed on the correction object layer L2 as shown in Fig. 6E, whereby such similar state as the correction instructions related to prescribed correction object portions are described in the proof is displayed on the display part 12. Therefore, the operator can correct the object portions of the correction object layer L2 according to the correction instructions while confirming the correction instructions on the display part 12. Thus, the operator can reliably perform correction based on the results of proofreading. Fig. 8 illustrates a layout image expressed by the temporary data D7 after performing correction according to the correction instructions C1 and C2. The divisional lines d1 shown in Fig. 8 are not written in the actual layout image, similarly to the above.

According to this embodiment, further, the edit processing part 244 generates correction history data D8 when the operator performs some correction processing. Fig. 9A is a diagram for illustrating unit correction data D8S forming data units of the correction history data D8. The unit correction data D8S is constituted of a correction ID region R1 in which a correction ID for identifying individual correction processing is described, an object drawing information region R2 in which drawing information for each object to be corrected is described, a relevant block information region R3 in which relevant block information showing the block relevant to this correction is described and a result flag region R4 in which a result flag indicating whether or not the correction is employed as a result is described.

The object drawing information is corresponded to by such information as processing information indicating whether the correction processing is that for adding a new object or that for deleting an already arranged object, classification information for identifying whether the object is formed by characters, an image or a line drawing, information defining the object such as that defining the shape, size or color if the object is a graphic, information defining the type or size of the font if the object is formed by characters, or description information defining a described sentence or the like, for example. Further, the number of a block in which the object related to correction is (or has been) arranged is described in the relevant block information region R3 on the basis of the description information of individual correction processing, particularly information related to the size. "1" or "0" is described in the result flag region R4 for reflecting or canceling each correction processing.

Every time the operator performs some correction processing on the correction object layer L2, the unit correction data D8S including the contents of this correction processing are sequentially described in the correction history data D8. In other words, the correction history data D8 is described as a set of the unit correction data D8S. Fig. 9B illustrates correction history data D8 implementing the state of the layout image shown in Fig. 8 as a result of correction performed on the correction object layer L2 according to the correction instructions C1 and C2 (see Figs. 6B and 6C). According to Fig. 9B, it follows that this correction is implemented by performing three correction procedures. Since the correction processing is performed sequentially from that having a small correction ID, it follows that addition of a filling object OBJ1 (Fig. 8) has been correction processing related to unit correction data D81 having a correction ID "1" in the correction history data D8 illustrated in Fig. 9B. This corresponds to correction processing performed according to the correction instruction C 1 for converting the color of the background (back) to blue. While specific contents according to a data format for describing the object and definition of the object are described in the object drawing information region R2 in practice, description thereof is omitted in order to avoid intricateness.

Succeedingly, correction processing related to unit correction data D82 and D83 having correction IDs "2" and "3" has been performed. This is correction processing performed according to the correction instruction C2 for changing the character size to 18 pt. (points) and implemented by temporarily deleting an originally arranged character object OBJO (Fig. 7) (correction processing according to the unit correction data D82) and thereafter arranging a character object OBJ2 of 18 pt. (Fig. 8) (correction processing related to the unit correction data D83) along the correction instruction C2. The number (m, n) of the block related to each correction processing is described in the relevant block information region R3, except that when the object is deleted as in the correction processing related to the unit correction data D82, the number (m, n) of the block in which the object had been arranged before deletion is described.

Alternatively, correction processing of changing the font size may be directly performed on the original character object OBJ0, and in this case, correction history data in which the contents of the correction processing are described as unit correction data is generated.

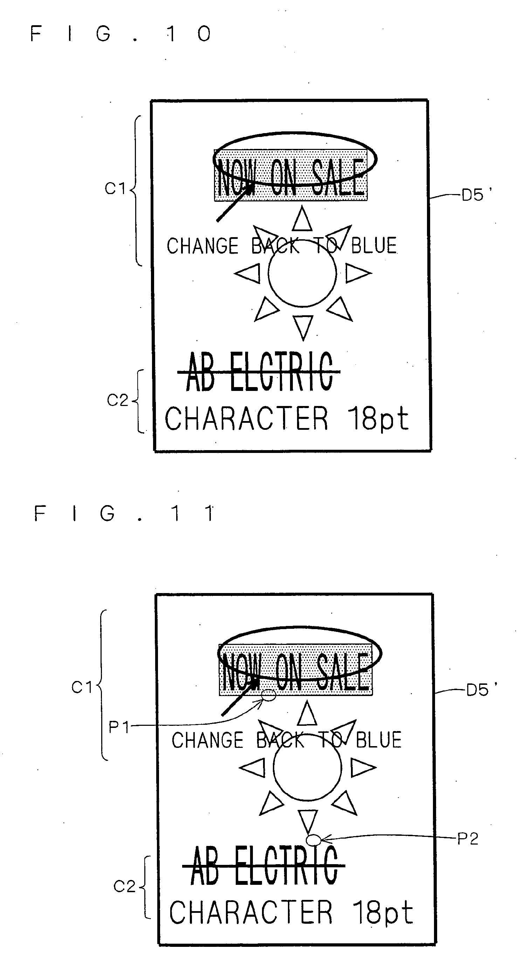

Fig. 10 illustrates a layout image of layered data D5' based on the temporary data D7 after the aforementioned correction processing displayed on the display part 12. The differential layer L1 and the correction object layer L2 (expressed by the temporary data D7 in this case) are superposed with each other in the layered data D5' as shown in Fig. 10, whereby the operator would visually recognize that correction processing has been performed according to the correction instructions C1 and C2 and that no correction instruction is left unprocessed.

When determining that entire correction processing has been properly performed according to the correction instructions, the operator issues a prescribed operation instruction through the operation part 11, for defining the contents of correction processing. More specifically, the contents of the latest temporary data D7 are assumed to be corrected printing data D9. The corrected printing data D9 is stored in the storage part 13, the RAM 16c, or the like, and subjected to RIP for a regular press according to a prescribed instruction (step S6).

According to this embodiment, as hereinabove described, the correction instructions having been described in the proof and the printing image expressed by the printing data for proof output are superposed with each other in the layered data D5 so that the operator can perform correction processing based on the results of proofreading on the printing data while visually recognizing the same on the display part 12, whereby slippage of correction can be prevented. In other words, the printing data processor according to this embodiment can create proofread (revised) printing data, with reliably reflecting correction instructions in proofreading.

### <Reference to and Re-Correction of Correction History>

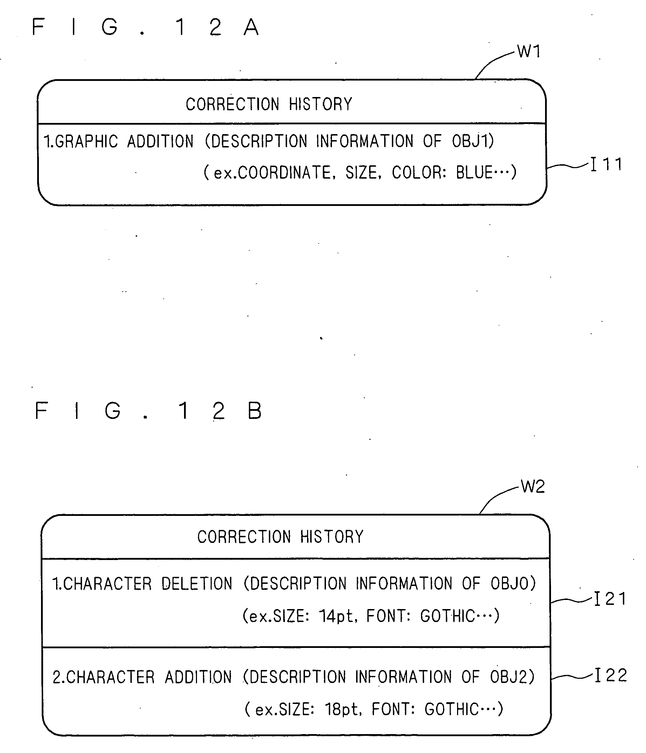

In addition to the aforementioned mode, the printing data processor 1 according to this embodiment is characteristic in making it possible to easily confirm what kind of correction has been made as to a certain portion, i.e., a correction history as to an arbitrary place in a printed image through the function of the history reference processing part 245. A case of referring to a correction history with respect to points P1 and P2 in a layout image (identical to the image shown in Fig. 10) expressed by the layered data D5' as shown in Fig. 11 is now described.

During the correction processing at the step S5 in Fig. 4, when the operator specifies the aforementioned point P1 or P2 by operating the operation part 11 (by clicking and pointing out the point P1 or P2 with the mouse (not shown), for example), while the display part 12 displays the layout image of the correction object layer L2 (temporary data D7), the history reference processing part 245 determines to which block this point P1 or P2 corresponds. The point P1 corresponds to a block (4, 4), while the point P2 corresponds to a block (9, 6).

Upon specification of the corresponding block, the correction processing corresponding to the relevant block information region R3 including the block number of the specified block is determined (see Fig. 9B), so that the correction history is displayed on the display part 12 on the basis of the result. Figs. 12A and 12B illustrate correction history display windows W1 and W2 displayed on the display part 12 as exemplary correction history display.

Correction processing related to the unit correction data D81, i.e., only correction processing for converting the color of the background (back) to blue is performed on the block (4, 4) corresponding to the point P1 (wave line in Fig. 9B). When the operator specifies the point P1, therefore, the correction history display window W1 shown in Fig. 12A is displayed on the display part 12. More specifically, that the filling object OBJ1 has been added is concretely displayed according to a prescribed format along with the contents of the object, as shown as a history item I11 in the correction history display window W1. In this case, the subsequently performed correction processing related to the unit correction data D82 and D83 is not displayed, since the same is irrelevant to the block (4, 4).

On the other hand, correction processing related to the unit correction data D82 and that related to the unit correction data D83 are performed on the block (9, 6) corresponding to the point P2 (double wave line in Fig. 9B). When the operator specifies the point P2, therefore, it follows that the correction history display window W2 shown in Fig. 12B is displayed on the display part 12. More specifically, that the character object OBJ0 has been deleted as shown in a history item I21 and that the OBJ2 has been added after this deletion as shown in a history item I22 is displayed in the correction history display window W2 according to a prescribed format along with the contents of the object. In this case, the precedently performed correction processing related to the unit correction data D81 is not displayed, since the same is irrelevant to the block (9, 6).

Thus, according to this embodiment, through the function of the history reference processing part 245, it is enabled to display the history of only correction processing performed on (block including) an arbitrary portion of the layout image based on the correction object layer L2 on the display part 12, in order of the correction processing, in response to pointing out the arbitrary portion while displaying the layout image. The mode of history display is not restricted to the aforementioned case but, when the operator specifies a certain position as a point for referring to the correction history, for example, the correction history related to a block including this point may be displayed in the vicinity of the block in a display format such as that of the so-called "balloon".

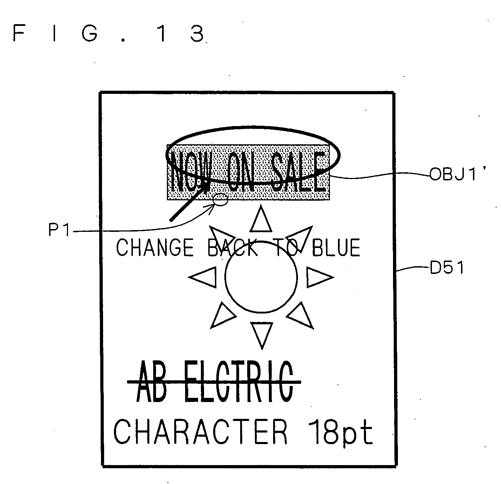

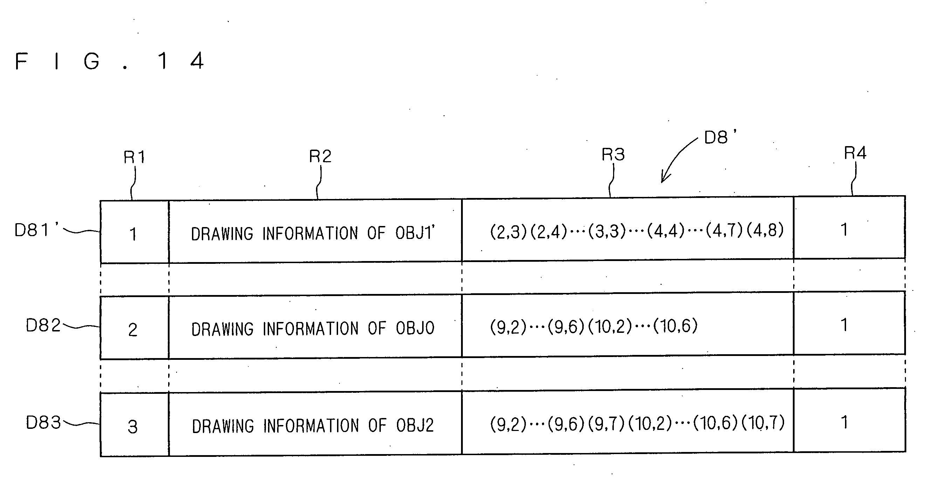

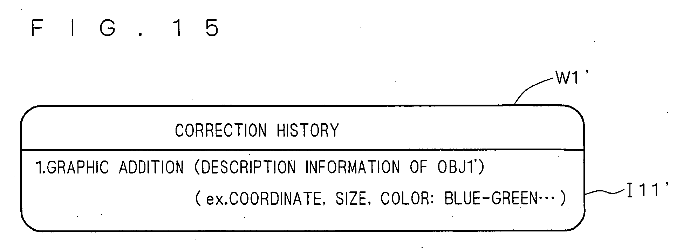

By way of contrast, a case where no correction processing according to a correction instruction but erroneous correction processing has been performed is described. Fig. 13 illustrates a layout image based on layered data D51 to which not the correct filling object OBJ1 shown in Fig. 8 but an erroneous filling object OBJ1' has been added as correction processing based on the correction instruction C 1 although correction processing based on the correction instruction C2 has been correctly performed. Referring to Fig. 13, it is assumed that the filling object OBJ1' is a "blue-green" object. However, while the filling object OBJ1' is described as a "blue-green" object for the purpose of simplification, more strict color specification based on the CMYK colorimetric system, for example, is preferably performed in practice. It is assumed that color specifications C: 100 %, M: 50 %, Y: 50 % and K: 30 % are made in the filling object OBJ1' as "blue-green". Fig. 14 illustrates correction history data D8' generated in this case similarly to the aforementioned case, and Fig. 15 illustrates a correction history display window W1' as to the same point P1 as that shown in Fig. 11.

When the operator specifies the point P1 in order to confirm the contents of the correction processing, it follows that the correction history display window W1' is displayed on the display part 12 for showing the operator that the correction processing performed on the point P1 is addition of the filling object OBJ1' for converting the color of the background related to the unit correction data D81' to blue-green (C: 100 %, M: 50 %, Y: 50 % and K: 30 %). Since the contents of the correction instruction C1 are described in the differential layer L1, the operator can easily confirm whether or not the correction processing performed in the vicinity of the point P1 is along the correction instruction C1 by comparing/contrasting the description contents of the differential layer L1 and the correction history display window W1' with each other. As the correction processing is, in fact, not that for converting the color of the background to blue (C: 100 %, M: 50 %, Y: 0 % and K: 30 %) required by the correction instruction C1 but arrangement of the filling object with the color having the different color density of the Y component, the operator would perform re-correction for correcting this again when recognizing it.

While there are some methods for such re-correction, consider a case of performing re-correction by deleting the temporarily added filling object OBJ1' and arranging the correct filling object OBJ1, i.e., by canceling addition of the filling object OBJ1' and arranging the filling object OBJ1. In this case, the operator must select a history item I11' on the correction history display window W1' through the operation part 11 for canceling this correction through a prescribed operation and executes new correction processing.

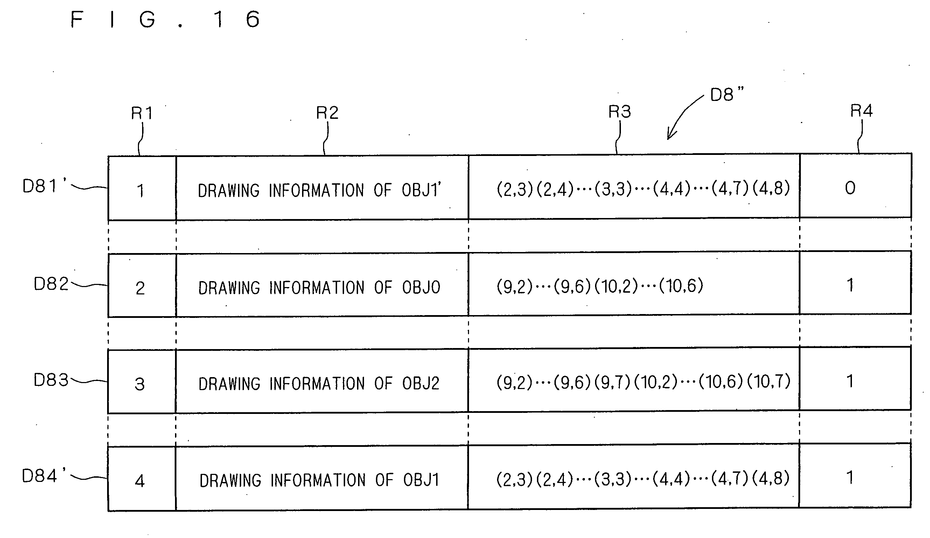

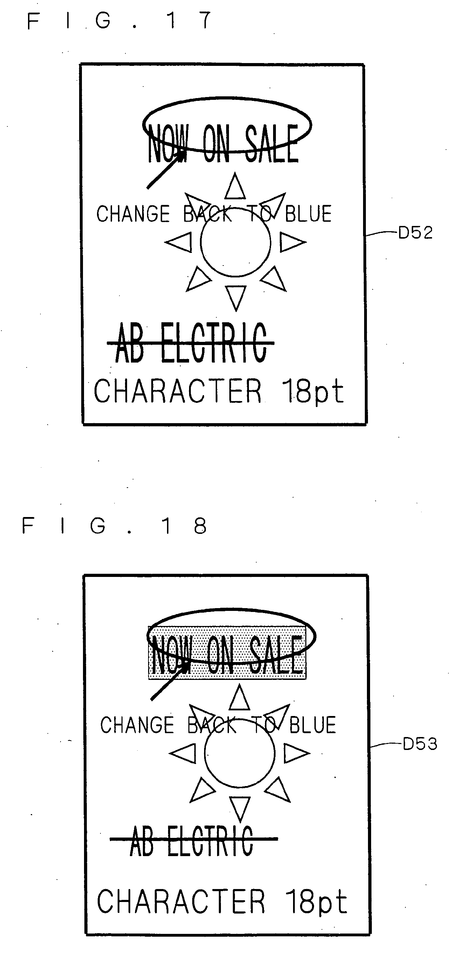

Fig. 16 shows correction history data D8" in this case. Since the addition of the object by correction processing related to the unit correction data D81' (Fig. 14) is cancelled, "0" is described in the result flag region R4 of the unit correction data D81' in place of "1" through the function of the edit processing part 244 (see Fig. 14) when the operator instructs deletion through the operation part 11. Then, new unit correction data D84' to which "4" is assigned as a correction ID is added to correction history data "D8", when the processing of newly adding the filling object OBJ1, in response to the addition instruction issued by the operator through the operation part 11, is performed based on the function of the edit processing part 244. If correction processing according to the correction instruction C1 is performed, the description contents of the unit correction data D84' are identical to those of the unit correction data D81. Fig. 17 illustrates a layout image according to layered data D52 when "0" is described in the result flag region R4 of the unit correction data D81'. As shown in Fig. 17, the operator can re-correct only a necessary portion absolutely regardless of the contents of correction processing performed on the basis of the correction instruction C2 after correction processing based on the correction instruction C1.

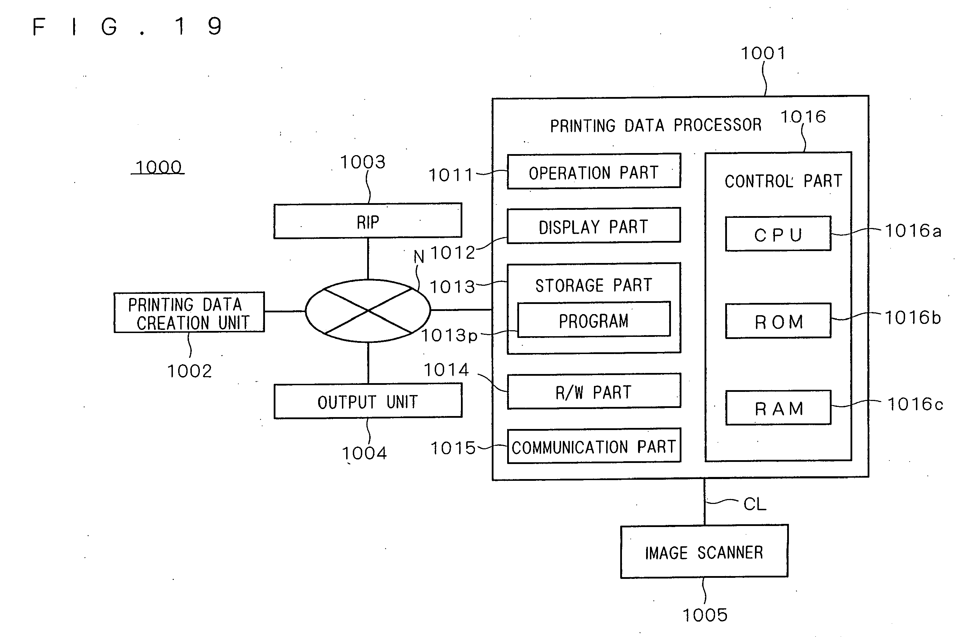

In the case where cancellation of correction processing as to the point P2 (see Fig. 11) related to the correction history display window W2 shown in Fig. 12B, i.e., correction processing derived on the history item I21 among some correction processing based on the correction instruction C2, i.e., correction processing based on the unit correction data D82 is instructed by the operator through the operation part 11, assuming subsequent correction processing to be effective as such gives no consistency to the situation to be implemented by that correction processing. And hence correction processing related to the block (9, 6) to which the point P2 belongs and performed subsequently to correction processing based on the unit correction data D82, i.e., correction processing provided with a larger correction ID than that based on the unit correction data D82 is also canceled. This is implemented by extracting the unit correction data in which the block number (9, 6) is described from the relevant block information region R3 of the correction history data D8 and zeroing the result flag for the corresponding unit correction data. Fig. 18 illustrates a layout image based on layered data D53 in this case.

It is also possible to render temporarily canceled correction effective again by issuing a prescribed operation instruction through the operation part 11. In this case, "1" is described in the result flag region R4 of the corresponding unit correction data again.

According to this embodiment, the printing system 100 manages individual correction processing with the correction history data D8 while rendering a correction history on an arbitrary portion referable, whereby it is possible to easily cancel or re-correct only correction processing performed on a place determined to be complainable. At this time, correction contents in portions irrelevant to such re-correction are maintained regardless of the order of correction processing.

According to this embodiment, as hereinabove described, it is possible to select necessariness/unnecessariness of correction in units of individual correction processing in addition to confirmation and re-correction of the correction history in units of blocks. Thus, it is possible to reliably confirm that all correction instructions issued by the client have been executed and no portion requiring no correction has been erroneously corrected. Therefore, it is possible to create proofread (revised) printing data while reliably reflecting the correction instructions in proofreading in fidelity.

### <Second Embodiment>

### <System Structure>

Fig. 19 is a model diagram illustrating the structure of a printing system 1000 including a printing data processor 1001 according to a second embodiment of the present invention. The printing system 1000 is a system bearing a series of workflows from creation of printing data to proofreading, inspection and output. This printing system 1000 mainly comprises the printing data processor 1001, a printing data creation unit 1002, an RIP (raster image processor) 1003, an output unit 1004 and an image scanner 1005. While Fig. 19 shows such a mode that the printing data processor 1001, the printing data creation unit 1002, the RIP 1003 and the output unit 1004 are electrically connected with each other through a network N such as a LAN (local area network), for example, and the image scanner 1005 is electrically connected to the printing data processor 1001 through a communication line CL, this is not an essential mode. Alternatively, the image scanner 1005 may also be connected to the network N. Further alternatively, the respective units may be individually present for transferring data therebetween through a prescribed recording medium.

The printing data processor 1001 is an apparatus bearing inspection processing of printing data created in the printing data creation unit 1002. The details of the printing data processor 1001 are described later.

The printing data creation unit 1002 is an apparatus bearing processing similar to that of each printing data creation unit 2 according to the first embodiment. This printing data creation unit 1002 is also used for correcting the printing data according to a result of a proofreading about a proof (proof sheet) outputted on the basis of the printing data having been temporarily created. In the following description, printing data newly created in the printing data creation unit 1002 is referred to as first printing data, and printing data obtained by correcting the first printing data is referred to as second printing data. In other words, the first printing data is the so-called first revise data or printing data criterial for inspection, and the second printing data is the so-called revise data or printing data subjected to inspection. The printing data creation unit 1002 is implemented by a computer enabled to execute layout processing through prescribed layout software loaded therein, for example.

The RIP 1003 generates bit-mapped data (rasterized data) output-processible in the output unit 1004 by performing raster image processing (rasterization) on printing data created or corrected in the printing data creation unit 1002. In other words, the RIP 1003 functions as an output data generator. In rasterization, the RIP 1003 generates rasterized data having resolution responsive to the output resolution of the output unit 1004, the contents of the printing data or the object of inspection. The RIP 1003, generating rasterized data having output resolution of about 300 to 400 dpi if the output unit 1004 is that for proofreading, for example, generates halftone dot image data having high resolution of about 2400 dpi as rasterized data if the output unit 1004 is that for a regular press or a unit for proofreading such as a high-end DDCP capable of forming halftone dots equivalent to those of actual printed matter. A well-known technique is applicable to rasterization. In the following description, data obtained by rasterizing the first printing data is referred to as first rasterized data and that obtained by rasterizing the second printing data is referred to as second rasterized data.

The printing data creation unit 1002 and the RIP 1003, connected to the network N as different units in Fig. 19, may alternatively form an integral unit. Further alternatively, the printing data processor 1001 may comprise an RIP function, similarly to the printing data processor 1 according to the first embodiment, for rasterizing printing data not yet subjected to RIP transferred from the printing data creation unit 1002 to the printing data processor 1001 thereafter to subject to inspection processing.

The output unit 1004 is a unit outputting printed matter on the basis of the rasterized data obtained by rasterizing the printing data. In the printing system 1000 according to this embodiment, the output unit 1004, which may at least output a proof, can be formed by that similar to the output unit 4 according to the first embodiment so far as the same can output printed matter suitable for usage as a proof.

The image scanner 1005 is an apparatus similar to the image scanner 3 according to the first embodiment.

### <Structure of Printing Data Processor>

The printing data processor 1001 is implemented by a computer, similarly to the printing data processor 1 according to the first embodiment. In other words, the printing data processor 1001 mainly comprises an operation part 1011, a display part 1012, a storage part 1013 for preserving a program 1013p for making the computer function a the printing data processor 1001 etc., an R/W part 1014, a communication part 1015 and a control part 1016 constituted of a CPU 1016a, a ROM 1016b and a RAM 1016c, which are components similar to those of the printing data processor 1, as shown in Fig. 19.

The printing data processor 1001 also implements the so-called GUI (graphical user interface) through functions of the control part 1016, the operation part 1011 and the display part 1012. The control part 1016 implements processing in each part described later also through this GUI.

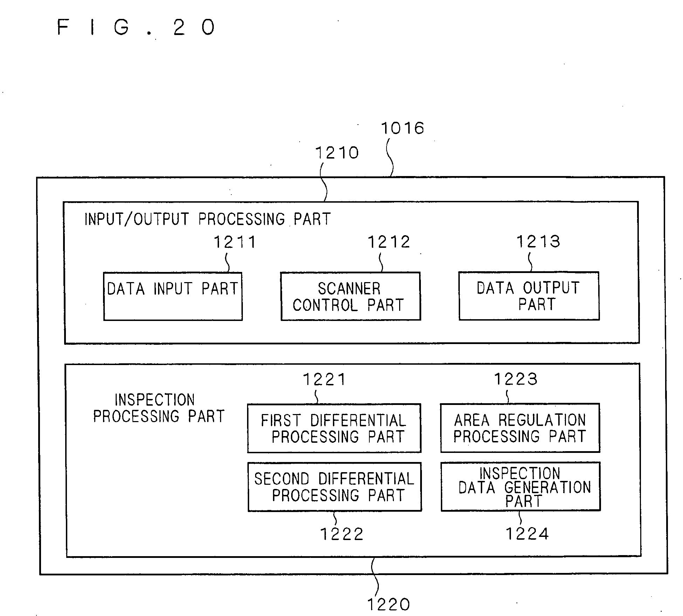

Fig. 20 is a diagram for illustrating functions implemented in the control part 1016 of the printing data processor 1001. The control part 1016 executes the prescribed program 1013p stored in the storage part 1013 with the CPU 1016a, the ROM 1016b and the RAM 1016c, thereby mainly implementing an input/output processing part 1210 and an inspection processing part 1220.

The input/output processing part 1210 implements processing related to data input/output between the printing data processor 1001 and an external unit and acquisition of image data from the image scanner 1005. The input/output processing part 1210 mainly comprises a data input part 1211, a scanner control part 1212 and a data output part 1213.

The data input part 1211 implements generation of a processing dialog or a processing menu used at the time of receiving data from outside the printing data processor 1001 through the network N, reading data recorded in a prescribed recording medium in the R/W part 1014 or acquiring image data from the image scanner 1005 and prescribed processing according to operation instructions by an operator through the operation parf 1011.

The scanner control part 1212 controls operations of the image scanner 1005 to perform scanning, when the operator issues an executive instruction for acquiring image data (correction instruction data) in the image scanner 1005 with the data input part 1211 through the operation part 1011, according to prescribed resolution, a prescribed scanning range, a prescribed scanning rate etc. in response to the executive instruction.

The data output part 1213 implements generation of a processing dialog or a processing menu used at the time of outputting data from the printing data processor 1001 through the network N, writing data in the prescribed recording medium in the R/W part 1014 and prescribed processing according to operation instructions by the operator through the operation part 1011.

The inspection processing part 1220 implements inspection processing of comparing the first and second rasterized with each other, extracting difference therebetween and confirming whether or not correction performed upon proofreading matches with correction instructions described in a proof. This embodiment is characteristic in a point that properness/improperness of correction processing can be determined by implementing a state of superposing an image of the correction instructions with a differential image between uncorrected and corrected rasterized data. Such image of correction instructions is generated by reading the correction instructions described in the proof with the image scanner 1005. The inspection processing part 1220 mainly comprises a first differential processing part 1221, a second differential processing part 1222, an area regulation processing part 1223 and an inspection data generation part 1224.

The first differential processing part 1221 performs first differential processing of extracting the differential between the first and second rasterized data. The first differential processing is processing of obtaining a differential value per pixel by performing differential operation of color density values of these data in units of pixels. When the first differential processing part 1221 performs first differential processing, a nonzero differential value is obtained on a pixel position having been subjected to correction in response to correction instructions. As a result of first differential processing, the first differential processing part 1221 generates the first differential data as mapping data of such differential values in units of pixels.

While the first differential data is rendered visually recognizable on the display part 1012, preferably, an area where pixels having nonzero differential values are continuous, i.e., each area subjected to correction processing, is substitutionally displayed with a rectangular frame. The substitutional display with the rectangular frame has an effect of making it possible to more reliably determine validity of correction in inspection processing described later, in addition to reduction of the burden of the processing. This substitutional display can be implemented by a well-known technique.

The second differential processing part 1222 performs second differential processing of extracting the differential between the first rasterized data and correction instruction data. The second differential processing is processing of obtaining a differential value per pixel by performing differential operation of color density values of these data in units of pixels. As a result of the second differential processing, the second differential processing part 1222 generates the second differential data as mapping data of such differential values in units of pixels. Since the proof used for proofreading has been output on the basis of the first rasterized data, portions of correction instruction data, obtained on the basis of the proof in which the correction instructions are described, excluding the correction instructions must have color density values substantially identical to that of the first rasterized data. Therefore, the second differential processing corresponds to processing of extracting the correction instructions from the proof, and the second differential data is image data expressing only the correction instructions as an image. In this case, the second differential processing part 1222 can also properly extract correction instructions not described in red.

While the second differential data is rendered visually recognizable on the display part 1012, preferably, an area where pixels having nonzero differential values are continuous, i.e., each correction instruction, is substitutionally displayed with a rectangular frame. The substitutional display with the rectangular frame has an effect of making it possible to more reliably determine validity of correction in inspection processing described later, in addition to reduction of the burden of the processing. This substitutional display can be implemented by a well-known technique.

The area regulation processing part 1223 implements area regulation processing to perform some regulation for properly associating correction instructions with objects such as characters or images to be corrected. In inspection processing according to this embodiment, information of arrangement positions (originally description positions) of correction instructions is used for determining whether or not correction based on the correction instructions has been properly performed. However, the correction instructions are not necessarily described in the vicinity of the objects to be corrected in the proof but may be described in positions separated from the objects specified with arrows or leader lines, for example. In this case, particularly when the first and second differential data is substitutionally displayed with rectangular frames, it is hard to recognize to which objects the correction instructions are directed. According to this embodiment, the operator can properly regulate the arrangement positions or sizes of the correction instructions through the function of the area regulation processing part 1223, thereby to avoid this problem. More specifically, the operator regulates the correction instructions by dragging the same with a mouse included on the operation part 1011 or the like. Thus, the relation between the correction instructions and the objects is clarified, and more properly determining validity in inspection processing comes to be accomplished. Data obtained by area-regulating the second differential data is referred to as area-regulated data.

The inspection data generation part 1224 generates inspection data DI consisting of layers formed by the first differential data and the area-regulated data obtained in the aforementioned manner. On the basis of the inspection data DI, a state of layering (superposing) the first differential data and the area-regulated data with each other is rendered to be visually recognizable on the display part 1012. The operator performs inspection processing, i.e., processing of determining whether or not correction performed upon proofreading matches with the correction instructions described in the proof, on the basis of this superposed state. Preferably, a state of substitutionally displaying the contents of the first differential data and the area-regulated data with rectangular frames of different colors respectively is rendered to be visually recognizable on the display part 1012, so that the operator determines validity of the correction through the superposed state of the rectangular frames.

### <Generation of Proof and Proofreading>

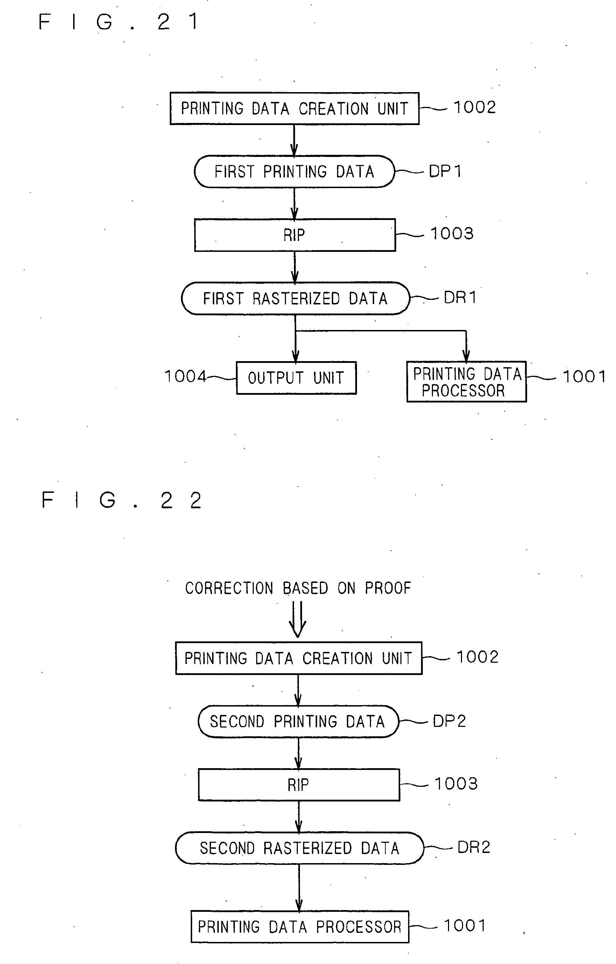

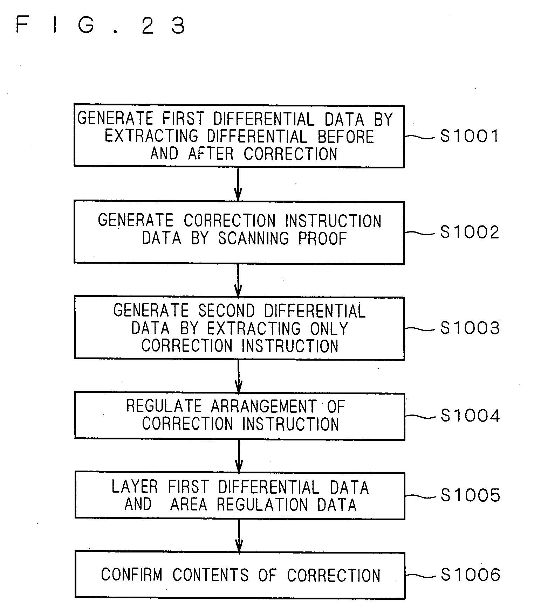

Formation of the proof and generation of data related to proofreading performed in advance of inspection processing are now described. Fig. 21 illustrates a flow of data related to output of the proof. Fig. 22 illustrates a flow of data after completion of correction based on the proof.

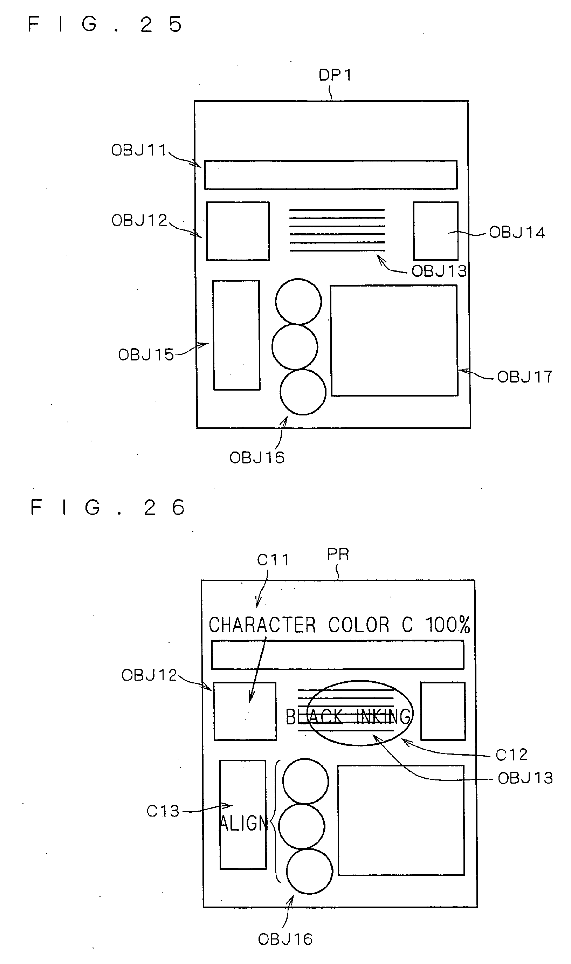

Printing data created at the printing data creation unit 1002 is transferred to the RIP 1003 as first printing data DP1, for example, through the network N. Fig. 25 illustrates an image expressed by the first printing data DP1. Referring to Fig. 25, seven objects OBJ11 to OBJ17 are arranged in the first printing data DP1.

When the operator issues a prescribed executive instruction for rasterization, the RIP 1003 rasterizes the first printing data DP1 and generates first rasterized data DR1, i.e., raster data having resolution suitable for output from the output unit 104. The RIP 1003 transmits the first rasterized data DR1 to the output unit 1004 through the network N.

The output unit 1004 outputs a proof on the basis of the received first rasterized data DR1. The output proof is subjected to proofreading by a proofreader.

The RIP 1003 transfers the first rasterized data DR1 also to the printing data processor 1001 through the network N, so that the first rasterized data DR1 is stored in the storage part 1013, the RAM 1016c, or the like.

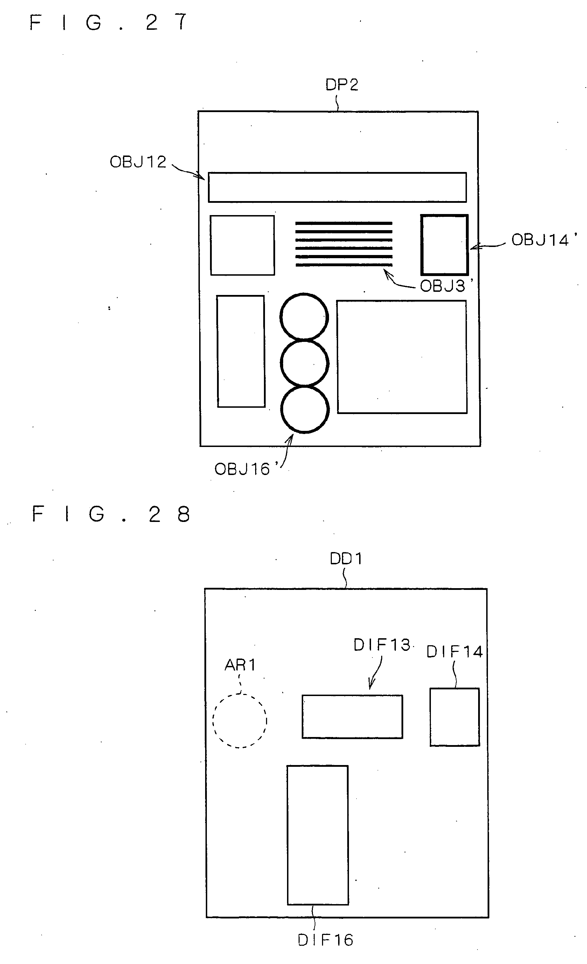

In proofreading of the proof, the proofreader confirms whether or not arrangement, appearance, color reproducibility etc. of laid-out characters, images etc. are erroneous or consistent with those intended in creation of the printing data. If necessary, the proofreader directly describes correction instructions in the proof. The proofreader generally describes the correction instructions with prescribed proofreader's marks or the like in red, or sometimes in another color. Fig. 26 illustrates a proof PR output on the basis of the first rasterized data DR1 obtained by rasterizing the first printing data DP1 shown in Fig. 25. Referring to Fig. 26, three correction instructions C11 to C13 are described. The correction C11 is directed to change the character color of the object OBJ12 to "C (cyan) 100 %". The correction instruction C12 is directed to change the object OBJ13 to black inking. The correction instruction C13 is directed to align the vertical arrangement of the object OBJ16.

Upon proofreading, correction of the printing data is performed in the printing data creation unit 1002 on the basis of the correction instructions described in the proof. The corrected printing data is transferred to the RIP 1003 as second printing data DP2. Fig. 27 illustrates an image expressed by the second printing data DP2 obtained by correcting the first printing data DP1 illustrated in Fig. 25 on the basis of the correction instructions described in the proof PR. Fig. 27 shows corrected objects with wide lines. In other words, the objects OBJ13, OBJ14 and OBJ16 of the first printing data DP1 have been corrected to objects OBJ13', OBJ14' and OBJ16' respectively. It is assumed that the object OBJ14 has been corrected although the proof PR includes no correction instruction directed thereto.

The RIP 1003 rasterizes the second printing data DP2 for generating second rasterized data DR2 which is raster data having the same resolution as the first printing data DP1. The RIP 1003 transfers the second rasterized data DR2 to the printing data processor 1001 through the network N, so that the second rasterized data DR2 is stored in the storage part 1013, the RAM 1016c, or the like.

The first and second rasterized data DR1 and DR2 are subjected to inspection processing described below.

### <Inspection processing>

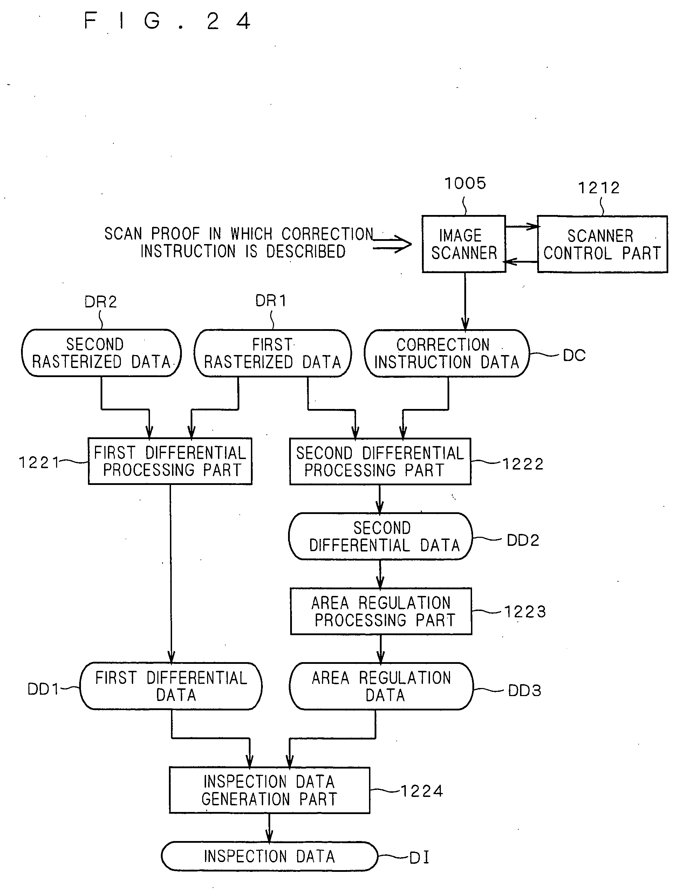

Inspection processing is now described. Fig. 23 illustrates a flow of inspection processing, and Fig. 24 illustrates a flow of data related to inspection processing.

When the operator issues a prescribed executive instruction through the operation part 1011, the first differential processing part 1221 performs first differential processing for obtaining the differential between the first and second rasterized data DR1 and DR2 obtained by rasterizing the first printing data DP1 and the second printing data DP2 before and after correction respectively, to generate first differential data DD1 (step S1001). The first differential data DD1 is temporarily stored in the storage part 1013, the RAM 1016c, or the like.

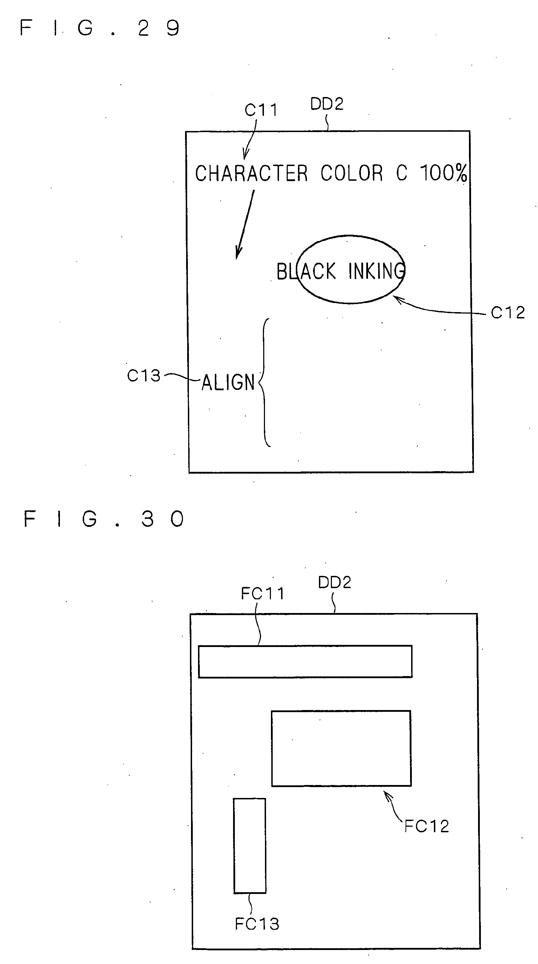

Fig. 28 illustrates an image expressed by the first differential data DD1. Referring to Fig. 28, differential regions are substitutionally displayed with rectangular frames. Since the three objects OBJ13, OBJ14 and OBJ16 of the first printing data DP1 have been corrected to the objects OBJ13', OBJ14' and OBJ16' respectively in generation of the second printing data DP2 as hereinabove described, three differential regions DIF13, DIF14 and DIF16 are obtained in the first differential data DD1 in correspondence to this correction. Since the object OBJ12 has not been corrected despite the correction instruction C11 for the object OBJ12 described in the proof PR in the aforementioned example, no differential region is obtained in an area AR1 of the first differential data DD1 corresponding to the position of arrangement of the object OBJ12 in the printing data DP1 shown in Fig. 25, as a matter of course.

Then, correction instruction data DC, which is image data of the image of the proof PR, is generated by reading the proof PR with the image scanner 1005 (step S1002). The correction instruction data DC is stored in the storage part 1013, the RAM 1016c, or the like. The operation of the image scanner 1005 is controlled by the scanner control part 1212. The order of the steps S1001 and S1003 may alternatively be exchanged.

Upon acquisition of the correction instruction data DC, the second differential processing part 1222 executes second differential processing of obtaining the differential between the first rasterized data DR1 and the correction instruction data DC to generate the second differential data DD2 (step S1003). The second differential data DD2 is stored in the storage part 1013, the RAM 1016c, or the like. Fig. 29 illustrates an image expressed by the second differential data DD2. Referring to Fig. 29, the three correction instructions C 11 to C13 described in the proof PR have been extracted.

Upon acquisition of the second differential data DD2, the area regulation processing part 1223 executes area regulation processing for regulating the positions of arrangement of the extracted correction instructions (step S1004). In area regulation processing, the second differential data DD2 and the first rasterized data DR1 are temporarily layered through the function of the area regulation processing part 1223, to be displayed on the display part 1012, while the respective correction instructions are rendered to be movable and deformable through the operation part 1011. The following description is made on a case of performing regulation that areas (correction instruction areas) occupied by the respective correction instructions are substitutionally displayed with rectangular frames. Alternatively, the positions of arrangement of the correction instructions C11 to C13 may be directly regulated.

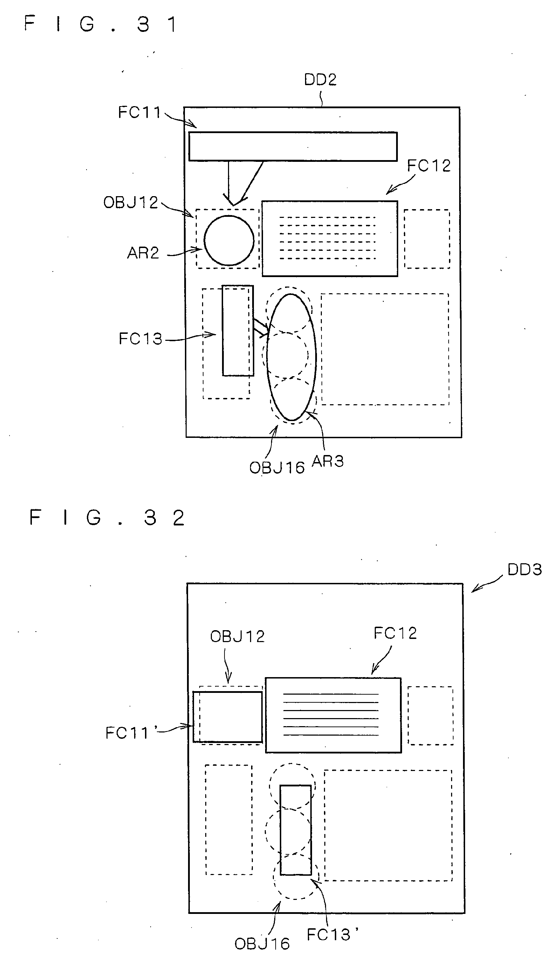

Fig. 30 shows a case of displaying the correction instructions C11 to C13 shown in Fig. 29 as correction instruction areas FC11 to FC13 with rectangular frames respectively. Fig. 31 is a diagram for illustrating the contents of area regulation processing. Fig. 31 shows the image formed according to the first rasterized data DR1 with broken lines.

Referring to Fig. 26, the correction instruction C12 is described immediately on the corresponding object OBJ13, while the correction instruction C11 is described in a position separated from the corresponding object OBJ11 with arrow and the correction instruction C13 is described in a position partially superposing with an object OBJ15 adjacent to the corresponding object OBJ16 with braces. Therefore, the positions of arrangement of the correction instruction areas FC11 and FC13 are inconsistent with those of the corresponding objects. Therefore, the operator must perform area regulation on these correction instruction areas. For example, the operator must move the correction instruction areas FC11 and FC13 to the vicinity of areas AR2 and AR3 immediately above the objects OBJ12 and OBJ16 respectively as shown in Fig. 31, while changing the sizes thereof as the case may be.

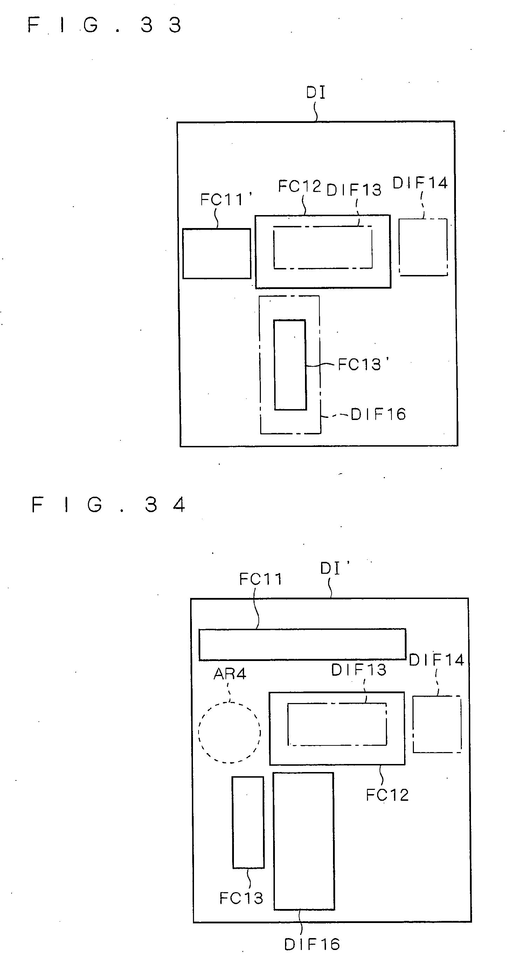

Fig. 32 illustrates an image expressed by area regulation data DD3 obtained by this area regulation processing. The area regulation data DD3 is stored in the storage part 1013, the RAM 1016c, or the like. While the area regulation data DD3 has no layered structure, Fig. 32 also illustrates the image according to the first rasterized data DR1 with broken lines similarly to Fig. 31, for convenience of explanation. Referring to Fig. 32, correction instruction areas FC11' and FC13' obtained by changing the positions of arrangement and the sizes of the correction instruction areas FC11 and FC13 respectively are arranged immediately on the objects OBJ12 and OBJ16 respectively. Thus, it follows that a state of locating correction instruction areas corresponding to correction instructions immediately on objects be corrected respectively. In other words, this state indicates that the positions where the correction instruction areas are arranged are those where the objects to be corrected are present in the proof PR respectively.

Since correction instruction areas may be simply arranged and regulated to clarify with which correction instructions for what objects the respective correction instruction areas are associated, it is not necessary to strictly match the positions and sizes of the correction instruction areas with those of the corresponding objects respectively. If no area regulation processing is necessary, the second differential data DD2 is employed as the area regulation data DD3 as such in subsequent processing.

Upon acquisition of the area regulation data DD3, the inspection data generation part 1224 layers the first differential data DD1 and the area regulation data DD3 to generate inspection data DI (step S1005). The inspection data DI is stored in the storage part 1013, the RAM 1016c, or the like. It is assumed that layers formed by the first differential data DD1 and the area regulation data DD3 are referred to as a differential layer and a correction instruction layer respectively in the inspection data DI. Fig. 33 illustrates an image expressed by the inspection data DI. The differential layer and the correction instruction layer, shown by one-dot chain lines and solid lines in Fig. 33 respectively for convenience of illustration, are preferably displayed in different colors respectively. When the layers are displayed in different colors respectively, it follows that the operator can easily determine whether each of rectangular frames displayed on each layer as substitutionally displaying shows a differential area of the differential layer or a correction instruction of the correction instruction layer in inspection processing described below.

Upon generation of the inspection data DI, inspection processing is performed on the image displayed on the display part 1012 on the basis of the contents of the inspection data DI (step S1006). More specifically, the operator confirms whether or not the first printing data DP1 has been corrected according to the correction instructions described in the proof, i.e., whether or not the second printing data DP2 has been obtained with contents intended by the proofreader, and determines validity of the correction, on the basis of the image shown in Fig. 33.

On the inspection data DI having the differential layer and the correction instruction layer, rectangular frames appearing in the former indicate that the corresponding portions are corrected areas (differential areas) regardless of consistency with the correction instructions, while areas (correction instruction areas) occupied by rectangular frames appearing in the latter indicate that it is instructed on the proof that objects present on positions of the first printing data DP1 corresponding to the positions of arrangement of the areas have been to be corrected. If rectangular frames are present in both of the differential layer and the correction instruction layer on the same positions in the image expressed by the inspection data DI, i.e., if the differential areas and the correction instruction areas are superpositively present on the same positions, therefore, it follows that some correction instructions have been issued and actual correction has been performed as to the objects arranged on the positions in the first printing data DP1. If the differential area and the correction instruction area are displayed in different colors respectively, this determination is rendered easier and more reliable. The operator determines validity of correction based on the proof by observing the state of arrangement of the differential area and the correction instruction area displayed with rectangular frames. In the case of the inspection data DI shown in Fig. 33, it follows that the following three states are confirmable:

In the first case, the differential area DIF13 and the correction instruction area FC12 are superposed with each other, while the differential area DIF16 and the correction instruction area FC13' are superposed with each other. Therefore, it is understood that some corrections at these portions have been performed in response to the correction instructions described in the proof PR.

In the second case, on the other hand, no correction instruction area is present in the correction instruction layer on the location of the differential area DIF14. Therefore, the operator can determine that the correction resulting in the differential area DIF14 is not responsive to a correction instruction but the object present on this position has been altered against the intention of the proofreader.

In the third case, no differential area is present in the differential layer on the location of the correction instruction area FC11'. Therefore, the operator can determine that the object present on this position, which had to be corrected on the basis of the correction instruction area FC11', more specifically in relation to the correction instruction C11, has not been corrected.

In other words, it follows that the operator can determine that the inspection data DI shown in Fig. 33 has not been properly corrected due to the aforementioned second and third cases. If it is determined that all present correction instruction areas and all differential areas are superposed with each other and no correction instruction area or differential area is singly present, it follows that correction has been made in correspondence to all correction instructions.

If the second differential data DD2, requiring area regulation as described above, is layered without area regulation, inspection data DI' shown in Fig. 34 is obtained. In this case, differential areas identical to those of the inspection data DI obtained through area regulation appear on the differential layer, while correction instruction areas appear on different positions of the correction instruction layer from those of inspection data DI. In this case, the differential area DIF13 and the correction instruction area FC12 properly correspond to each other, while no other proper correspondence is observed as to rectangular frames of other areas. Therefore, the operator would erroneously determine that the correction at the differential area DIF16 has also been redundantly executed similarly to at the differential area DIF14 in spite of its essential propriety, and besides, determine that corrections at the positions of arrangement of the correction instruction areas FC11 and FC13, where no correction is essentially needed to the objects located thereon, is to be required. Further, since the area AR4 has neither differential area nor correction instruction area, the operator erroneously determines that no correction instruction has been issued for the object (OBJ12 shown in Fig. 26) present on the corresponding position, which must be corrected, and this object has not been corrected in practice. According to this embodiment, it is possible to easily avoid such errors by properly performing the aforementioned area regulation processing.

According to this embodiment, as hereinabove described, it is possible to easily determine whether or not correction having been performed on each portion of printing data reflects the corresponding correction instruction, on the basis of an image based on inspection data and displayed on a display part. Also when a correction instruction is described in a position separated from an object to be corrected in a proof, it is possible to reliably determine the same. Thus, it is possible to easily and properly determine whether re-correction is necessary or the process can shift to output processing, thereby implementing efficient processing in a printing workflow.

While the invention has been shown and described in detail, the foregoing description is in all aspects illustrative and not restrictive. It is therefore understood that numerous modifications and variations can be devised without departing from the scope of the invention.

## Claims

1. A printing data processor comprising:
a differential element generating differential data between first image data and proof data, wherein said proof data is generated by reading a proof sheet related to said first image data with a prescribed reader;
a layering element generating layered data having a first and a second layer, wherein said first layer is formed on the basis of said differential data and said second layer is formed on the basis of second image data respectively; and
a display element displaying information related to correction with respect to said first image data on the basis of said layered data.

2. The printing data processor according to claim 1, further comprising:
an area division element virtually dividing printed matter expressed by said second image data to obtain a plurality of divided areas,
an edit element implementing correction processing with respect to said second image data on said second layer while making said display element display a superposed image of said first and second layers, and
a history reference element making said display element display the history of said correction processing according to a prescribed history reference instruction, wherein
said second image data is generator data of said first image data,
said edit element associating processing contents in said correction processing with a relevant divided area relevant to said processing contents among said plurality of divided areas per unit correction processing to record them as history data, and
said history reference element responses to arbitrary specification of an objected history reference position to make said display element display only such at least one processing content among said processing contents as said history that a divided area including said objected history reference position forms said relevant divided area.

3. The printing data processor according to claim 2, canceling execution of specific unit correction processing included in a history related to a certain divided area along with cancellation of correction processing performed after said specific unit correction processing among correction processing having said certain divided area as said relevant divided area.

4. The printing data processor according to claim 2, capable of arbitrarily setting the number of division for obtaining said divided areas.

5. The printing data processor according to claim 2, further comprising a rasterization element rasterizing said second image data to generate said first image data.

6. The printing data processor according to claim 1, further comprising a first differential element generating first differential data between said first image data and corrected image data obtained by correcting said first image data, wherein
said differential element is a second differential element, and said differential data is second differential data.

7. The printing data processor according to claim 6, wherein
said layering element is an inspection data creation element, and
said layered data is inspection data for forming a differential area in said first layer on the basis of said first differential data while forming a correction instruction area in said second layer on the basis of said second differential data,
for displaying a superposed state of said differential area and said correction instruction area on said display element on the basis of said inspection data.

8. The printing data processor according to claim 7, further comprising:
an area regulation element generating area regulation data by regulating an arrangement state of said correction instruction area in said second differential data, wherein
said second layer is formed through said area regulation data.

9. The printing data processor according to claim 7, wherein
said display element displays said differential area and said correction instruction area in different colors.

10. The printing data processor according to claim 7, wherein
said display element displays said differential area and said correction instruction area with rectangular frames.

11. A printing system comprising:
a) an image reader generating read image data by photoelectrically reading an image provided on a paper medium;
b) an output unit generating output based on image data described in a prescribed data format; and
c) a printing data processor comprising:
c-1) a differential element generating differential data between first image data and proof data, wherein said proof data is generated by reading a proof sheet related to said first image data with said image reader,
c-2) a layering element generating layered data having a first and a second layer, wherein said first layer is formed on the basis of said differential data and said second layer is formed on the basis of second image data respectively, and
c-3) a display element displaying information related to correction with respect to said first image data on the basis of said layered data.

12. The printing system according to claim 11, wherein
said printing data processor further comprises:
c-4) an area division element virtually dividing printed matter expressed by said second image data to obtain a plurality of divided areas,
c-5) an edit element implementing correction processing with respect to said second image data on said second layer while making said display element display a superposed image of said first and second layers, and
c-6) a history reference element making said display element display the history of said correction processing according to a prescribed history reference instruction,
said second image data is generator data of said first image data,
said edit element associating processing contents in said correction processing with a relevant divided area relevant to said processing contents among said plurality of divided areas per unit correction processing to record them as history data, and
said history reference element responses to arbitrary specification of an objected history reference position to make said display element display only such at least one processing content among said processing contents as said history that a divided area including said objected history reference position forms said relevant divided area.

13. The printing system according to claim 12, canceling execution of specific unit correction processing included in a history related to a certain divided area along with cancellation of correction processing performed after said specific unit correction processing among correction processing having said certain divided area as said relevant divided area.

14. The printing system according to claim 12, capable of arbitrarily setting the number of division for obtaining said divided areas.

15. The printing system according to claim 12, wherein
said printing data processor further comprises:
c-7) a rasterization element rasterizing said second image data to generate said first image data.

16. The printing system according to claim 11, further comprising:
d) a rasterization processor rasterizing prescribed image data to generate image data output-processible in said output unit, wherein
said printing data processor further comprises:
c-4) a first differential element generating first differential data between said first image data and corrected image data obtained by correcting said first image data, and
said differential element is a second differential element, and said differential data is second differential data.

17. The printing system according to claim 16, wherein
said layering element is an inspection data creation element, and
said layered data is inspection data for forming a differential area in said first layer on the basis of said first differential data while forming a correction instruction area in said second layer on the basis of said second differential data,
for displaying a superposed state of said differential area and said correction instruction area on said display element on the basis of said inspection data.

18. The printing data processor according to claim 17, wherein
said printing data processor further comprises:
c-5) an area regulation element generating area regulation data by regulating an arrangement state of said correction instruction area in said second differential data, and
said second layer is formed through said area regulation data.

19. The printing system according to claim 17, wherein
said display element displays said differential area and said correction instruction area in different colors.

20. The printing system according to claim 17, wherein
said display element displays said differential area and said correction instruction area with rectangular frames.

21. A printing data correction method of correcting printing data, comprising steps of:
a) generating differential data between first image data and proof data, wherein said proof data is generated by reading a proof sheet related to said first image data with a prescribed reader;
b) generating layered data having a first and a second layer, wherein said first layer is formed on the basis of said differential data and said second layer is formed on the basis of second image data respectively;
c) virtually dividing printed matter expressed by said second image data to obtain a plurality of divided areas;
d) performing correction processing with respect to said second image data on said second layer while making a prescribed display element display a superposed image of said first and second layers; and
e) making said display element display the history of said correction processing according to a prescribed history reference instruction,
for associating processing contents in said correction processing with a relevant divided area relevant to said processing contents among said plurality of divided areas per unit correction processing to record them as history data in said step d), and
responding to arbitrary specification of an objected history reference position to make said display element display only such at least one processing content among said processing contents as said history that a divided area including said objected history reference position forms said relevant divided area in said step e).

22. The printing data correction method according to claim 21, canceling execution of specific unit correction processing included in a history related to a certain divided area along with cancellation of correction processing performed after said specific unit correction processing among correction processing having said certain divided area as said relevant divided area.

23. The printing data correction method according to claim 21, capable of arbitrarily setting the number of division for obtaining said divided areas in said step c).

24. The printing data correction method according to claim 21, further comprising:
f) a step of generating said first image data by rasterizing said second image data.

25. An inspection processing method comprising steps of:
a) generating first differential data from first image data and corrected image data obtained by correcting said first image data;
b) generating proof data by reading a proof sheet related to said first image data with a prescribed reader;
c) generating second differential data from said first image data and said proof data;
d) generating inspection data having a first layer for forming a differential area on the basis of said first differential data and a second layer for forming a correction instruction area on the basis of said second differential data; and
e) displaying a superposed state of said differential area and said correction instruction area on a prescribed display element on the basis of said inspection data.

26. The inspection processing method according to claim 25, wherein
said step d) comprises:
d-1) a step of generating area regulation data by regulating an arrangement state of said correction instruction area in said second differential data, wherein
said second layer is formed through said area regulation data.

27. A program stored in and executed by a computer for making said computer function as a printing data processor, said printing data processor comprising:
a differential element generating differential data between first image data and proof data, wherein said proof data is generated by reading a proof sheet related to said first image data with a prescribed reader;
a layering element generating layered data having a first and a second layer, wherein said first layer is formed on the basis of said differential data and said second layer is formed on the basis of second image data respectively; and
a display element displaying information related to correction with respect to said first image data on the basis of said layered data.
